Europäisches Patentamt

European Patent Office

Office européen des brevets

(19)

(11) **EP 1 410 060 B1**

(12) **EUROPÄISCHE PATENTSCHRIFT**

(45) Veröffentlichungstag und Bekanntmachung des Hinweises auf die Patenterteilung:
**23.08.2006 Patentblatt 2006/34**

(51) Int Cl.:
***G01S 3/802*** *(2006.01)*

(21) Anmeldenummer: **02735382.0**

(22) Anmeldetag: **27.05.2002**

(86) Internationale Anmeldenummer:
**PCT/EP2002/005787**

(87) Internationale Veröffentlichungsnummer:
**WO 2003/001233 (03.01.2003 Gazette 2003/01)**

(54) **VERFAHREN ZUM PASSIVEN BESTIMMEN VON ZIELDATEN**

METHOD FOR PASSIVE DETERMINATION OF TARGET DATA

PROCEDE DE DETERMINATION PASSIVE DE DONNEES CIBLES

(84) Benannte Vertragsstaaten:
**AT BE CH CY DE DK ES FI FR GB GR IE IT LI LU MC NL PT SE TR**

(30) Priorität: **20.06.2001 DE 10129726**

(43) Veröffentlichungstag der Anmeldung:
**21.04.2004 Patentblatt 2004/17**

(73) Patentinhaber: **ATLAS ELEKTRONIK GMBH**
**28305 Bremen (DE)**

(72) Erfinder:
• **STEINER, Hans-Joachim**
**28359 Bremen (DE)**
• **STEIMEL, Ulrich**
**28876 Oyten (DE)**

(56) Entgegenhaltungen:
DE-A- 3 446 658     US-A- 4 274 148
US-A- 4 425 634

**EP 1 410 060 B1**

**Beschreibung**

Die Erfindung betrifft ein Verfahren zum passiven Bestimmen von Zieldaten durch richtungsselektiven Empfang von Schallwellen der im Oberbegriff des Anspruchs 1 genannten Art.

Um ohne Eigenverrat von einem Trägerfahrzeug, z.B. einem Oberflächenschiff oder U-Boot, Position, Geschwindigkeit und Kurs eines Ziels, z.B. eines Oberflächenschiffs, U-Boots oder Torpedos als Zieldaten zu bestimmen, werden mit einer Sonar-Empfangsanlage Schallwellen des Zielgeräusches empfangen und Peilwinkel zum Ziel gemessen. Aus diesen Peilwinkeln wird zusammen mit den Eigenpositionen des Trägerfahrzeugs eine Position des Ziels geschätzt und ein zugehöriger geschätzter Peilwinkel berechnet. Iterativ wird die Differenz zwischen dem gemessenen und dem geschätzten Peilwinkel solange verkleinert, bis eine Fehlergrenze unterschritten ist. Die zugrundeliegende geschätzte Position wird als Zielposition erkannt.

Ausgehend von einer Anfangsposition des Ziels, die z.B. willkürlich als Startposition auf einem ersten Peilstrahl gewählt wird oder durch andere an Bord befindliche Sensoren bekannt ist, werden Positionen aus geschätzten x-y-Komponenten für das Ziel berechnet und daraus geschätzte Peilwinkel bestimmt. Das Trägerfahrzeug fährt für die Peilwinkelmessungen mit konstantem Kurs während einer vorgegebenen Zeitdauer und legt einen Weg zurück, der Eigenleg genannt wird. Die jeweils gemessenen Peilwinkel werden mit den geschätzten Peilwinkeln verglichen und eine Peilwinkeldifferenz gebildet, bei deren Minimum der geschätzte Peilwinkel den wahren Peilwinkel bis auf einen Restfehler liefert. Der Restfehler ist abhängig von einer vorgebbaren Schwelle. Eine solche Filteranordnung ist beispielsweise in der DE 34 46 658 C2 beschrieben. Die Iterationszeit dieser Filteranordnung wird maßgeblich durch zusätzliche Eingaben bestimmt. Beispielsweise wird die Anfangsposition oder Stützwerte, die durch Beobachtung oder Meßwerte anderer Sensoren an Bord des Trägerfahrzeugs ermittelt werden, z.B. Seerohrbeobachtungen oder Radarmessungen eingegeben. Aus diesen Stützwerten werden Filterkoeffizienten ermittelt, die zu einer verbesserten ersten Schätzung der Zielposition führen.

Es ist Aufgabe der vorliegenden Erfindung ein Verfahren der im Oberbegriff des Anspruchs 1 genannten Art zu schaffen, bei dem ohne Eigenmanöver und ohne Meßwerteingaben anderer Sensoren an Bord des Trägerfahrzeugs eine sichere und den taktischen Anforderungen zeitlich angepaßte Bestimmung der Zieldaten möglich ist.

Diese Aufgabe wird erfindungsgemäß durch die Merkmale im Kennzeichenteil des Anspruchs 1 gelöst.

Nach einer Zieldetektion werden die richtungsselektiv zu Gruppensignalen zusammengefaßten Empfangssignale der elektroakustischen Wandleranordnung, beispielsweise einer Hufeisenbasis oder Seitenantenne an Bord eines U-Boots als Trägerfahrzeug oder einer von einem Oberflächenschiff oder einem U-Boot nachgeschleppten Schleppantenne, einer FourierTransformation unterworfen und die Frequenz von Spektrallinien im Frequenzspektrum der Gruppensignale bestimmt. Die Frequenz der Spektrallinie mit dem größten Pegel oder der Frequenzabstand benachbarter Spektrallinien wird als Empfangsfrequenz zusammen mit dem gemessenen Peilwinkel der Zieldatenschätzung zugrundegelegt. Es werden Zielpositionen geschätzt und dazu geschätzte Peilwinkel ermittelt. Zwischen dem gemessenen und geschätzten Peilwinkel wird eine Peilwinkeldifferenz bestimmt außerdem wird aus den gleichen geschätzten Zielpositionen und ihren zeitlichen Änderungen eine Dopplerverschiebung und eine vom Ziel abgestrahlte oder ausgesendete Sendefrequenz geschätzt. Die geschätzte Sendefrequenz wird entsprechend der geschätzten Dopplerverschiebung frequenzverschoben und bildet die geschätzte Dopplerfrequenz von der die Empfangsfrequenz abgezogen wird. Der Unterschied zwischen Empfangsfrequenz und geschätzter Dopplerfrequenz wird als Frequenzdifferenz zusammen mit der Peilwinkeldifferenz für die Bestimmung der Zieldaten nach dem Least-Square-Algorithmus verwendet.

Der Vorteil des erfindungsgemäßen Verfahrens nach Anspruch 1 besteht darin, daß für die Schätzung des Peilwinkels und der Dopplerverschiebung die gleichen Schätzdaten des Ziels, nämlich die geschätzten Zielpositionen verwendet werden. Die für die Ermittlung der Empfangsfrequenz notwendige Frequenzanalyse des Gruppensignals wird üblicherweise in einer Sonar-Empfangsanlage durchgeführt, sie dient beispielsweise der Erhöhung der Peilgenauigkeit oder Zieltrennung mehrerer unter einem Peilwinkel detektierter Ziele oder Klassifizierung von Zielen und stellt somit keinen zusätzlichen Signalverarbeitungsaufwand dar. Aus der gemessenen Empfangsfrequenz und der Annahme einer üblichen Fahrgeschwindigkeit eines Wasserfahrzeugs ist eine mögliche Sendefrequenz des Ziels als Anfangswert in einfacher Weise zu schätzen. Diese Sendefrequenz ist entweder die Frequenz einer Spektrallinie im Fahrgeräusch des Ziels oder einen ausgesendeten Sendesignals des Ziels. Durch die Einbeziehung der Empfangsfrequenz in die Zieldatenbestimmung ist der Vorteil gegeben, daß eine Zieldatenbestimmung ohne Eigenmanöver des Trägerfahrzeugs in kurzer Zeit möglich ist. Ein weiterer Vorteil besteht darin, daß zwei Ziele, die längere Zeit unter dem gleichen Peilwinkel zum Trägerfahrzeug fahren, getrennt werden können, da ihre Empfangsfrequenzen aufgrund unterschiedlicher Dopplerverschiebungen voneinander abweichen. Die Dopplerverschiebungen weisen einen bemerkenswerten Unterschied auf, weil die Radialgeschwindigkeitskomponenten zwischen Trägerfahrzeug und jedem der beiden Ziele sich unterscheiden müssen, wenn sich der Peilwinkel zu beiden Zielen nicht ändert.

Bewegt sich das Trägerfahrzeug mit konstanter Geschwindigkeit auf einem sog. Eigenleg, mit konstantem Kurs, so ändert sich die Empfangsfrequenz abhängig von der eigenen radialen Geschwindigkeitskomponente und der in gleiche Richtung weisenden radialen Geschwindigkeit des Ziels. Bei Kenntnis der eigenen Geschwindigkeit kann der Eigenanteil an der Dopplerverschiebung eliminiert werden und einzig und allein der Zielanteil betrachtet werden. Abgesehen von der Frequenzänderung über der Zeit, dem sog. Frequenzhub, findet während der Fahrt längs des Eigenleg eine Peilwinkeländerung über der Zeit statt. Die Zeit, bis Zieldaten stabil geschätzt werden können, nennt man Konvergenzzeit. Die Konvergenzzeit ist um so kürzer, je größer der Frequenzhub beim Durchfahren eines Eigenlegs ist. Versuche mit Meßdaten an Bord eines U-Boots haben gezeigt, daß bei einer Fahrt ohne Eigenmanövern und einem Frequenzhub von wenigen Hertz eine stabile Schätzung des Kurses, der Entfernung und der Geschwindigkeit des Ziels nach weniger als 10 min. erreicht wurde. Dabei betrug die Geschwindigkeit des Ziels 10 kn, die Geschwindigkeit des Trägerfahrzeugs 6 kn, die Anfangsentfernung zwischen Trägerfahrzeug und Ziel 6 km und der Peilwinkel zu Beginn der Messung -45°. Bei einer Schätzung der Zieldaten allein unter Berücksichtigung des Peilwinkels wäre eine Konvergenz nicht erzielbar. Durch die zusätzliche Messung der Empfangsfrequenz und Schätzen einer dopplerverschobenen Sendefrequenz ist eine Zieldatenschätzung möglich und in kurzer Zeit zu erreichen.

In der vorteilhaften Weiterbildung des erfindungsgemäßen Verfahrens nach Anspruch 2 wird zum Bestimmen der Empfangsfrequenz die bekannte Lofar-Analyse eingesetzt, wie sie beispielsweise in L. Kühnle "Classification and Identification - CAI- by Submarine Sonars", Naval Forces Nov. 1987, S. 27 - 31, beschrieben ist. Bei Empfang mit einer Schleppantenne, ist auch eine Schätzung von Zieldaten sehr weit entfernter Ziele wegen der geringen Dämpfung tieffrequenter Schallwellen im Übertragungsmedium und der guten Bündelung der Schallwellen sinnvoll und die Genauigkeit der Messung des Peilwinkels wegen des geringen Öffnungswinkels groß genug.

Steht keine Schleppantenne als elektroakustische Wandleranordnung zur Verfügung, ist es vorteilhaft, die Lofar-Analyse bei Empfang mit einer Seitenantenne, einem sog. Flank-Array, und eine Demon-Analyse bei Empfang mit einer Hufeisenbasis, einem sog. Conformal Array, vorzunehmen, bei der das empfangene Geräusch nach einer Bandpaßfilterung demoduliert wird und Frequenzen von Spektrallinien des demodulierten Signals bestimmt werden. Diese Frequenzen liegen im gleichen Frequenzband wie die über die Lofar-Analyse bestimmten Spektrallinien und werden durch Propellerdrehzahl und Propellerblattzahl verursacht, wie es in dem Artikel Navalforces usw. beschrieben ist.

Bei der Lofar-Analyse und der Demon-Analyse erhält man Frequenzspektren mit mehreren Spektrallinien, wobei die Spektrallinie mit der tiefsten Frequenz die Drehzahl des Propellers kennzeichnet. Falls diese Frequenz nicht empfangen wird, entspricht der Abstand benachbarter Spektrallinien dieser Frequenz. Für die Ermittlung der Zieldaten sind die Frequenzen selbst oder dieser Frequenzabstand als Empfangsfrequenz verwendbar.

Die Genauigkeit der Frequenzanalyse und Bestimmung der Empfangsfrequenz geht unmittelbar in die Genauigkeit der Zieldatenschätzung ein. Gemäß der Weiterbildung des erfindungsgemäßen Verfahrens nach Anspruch 4, wird nicht eine einzige Frequenz verwendet, sondern die Frequenzen mehrerer Spektrallinien werden zusammengefaßt und bilden die Empfangsfrequenz. Der Vorteil besteht insbesondere darin, daß nicht für jede Frequenz einzeln Sendefrequenzen und Dopplerverschiebungen geschätzt zu werden brauchen, sondern nur eine einzige Empfangsfrequenz in die Schätzung der Zieldaten eingeht. Dadurch wird der Schätzalgorithmus nicht vergrößert und trotzdem die Zieldatenschätzung optimiert.

Der Vorteil der Weiterbildungen des erfindungsgemäßen Verfahrens nach Anspruch 5, 6 und 7 besteht darin, daß bei Wegfall einer der Spektrallinien keine neue Empfangsfrequenz berechnet zu werden braucht, da sämtliche Frequenzen auf eine gemeinsame fiktive Spektralfrequenz einer Kunstspektrallinie transformiert werden und diese transformierten Frequenzwerte oder ihr Mittelwert Meßwerte der Empfangsfrequenz bilden. Verwendet man eine der Spektrallinien als Kunstspektrallinie, so muß hierfür keine Frequenztransformation durchgeführt werden, andererseits ist bei ihrem Verschwinden während eines Tracks die Schätzung nicht unterbrochen. Bei der Transformation auftretende Frequenzabweichungen der Frequenzwerte von der fiktiven Spektralfrequenz werden durch die Mittelwertbildung ausgeglichen.

Nach der vorteilhaften Weiterbildung des erfindungsgemäßen Verfahrens nach Anspruch 8 werden diese Frequenzabweichungen durch ein Least-Mean-Square-Verfahren ausgeglichen, indem die transformierten Frequenzwerte auf eine ausgewählte fiktive Spektralfrequenz verschoben werden. Dadurch wird erreicht, daß sämtliche während der Zeitdauer zur Verfügung stehenden Messungen von Spektrallinien genutzt werden, auch wenn einige Spektrallinien zeitweise verschwinden und für die Spektrallinien keine gültigen Messungen geliefert werden. Durch die Transformation der Frequenzen auf eine fiktive Spektralfrequenz einer Kunstspektrallinie ist auch dann eine Zieldatenermittlung möglich, wenn nur eine einzige Spektrallinie einen Beitrag für die fiktive Spektralfrequenz liefert. Diese Signalverarbeitung ist einsetzbar, da alle Spektrallinien eines Ziels prozentual die gleiche Dopplerverschiebung erfahren haben. Durch die Transformation der einzelnen Spektrallinien auf eine gleiche Kunstspektrallinie mit einer fiktiven Spektralfrequenz werden alle während des Tracks auftretenden Unregelmäßigkeiten bei der Frequenzmessung ausgeglichen.

Zur Schätzung der Dopplerfrequenz wird gemäß der vorteilhaften Weiterbildung des erfindungsgemäßen Verfahrens nach Anspruch 9 eine Quotientenfunktion aus geschätzten x-y-Komponenten der angenommenen Zielposition bestimmt. Diese mit Fehlern behafteten x-y-Komponenten werden aus einer Anfangsposition des Ziels zuzüglich einem geschwindigkeitsabhängigen Wegterm mit Geschwindigkeitskomponentenfehlern und Wegkomponentenfehlern ermittelt. Die Anfangsposition des Ziels wird beispielsweise unter Berücksichtigung der Reichweite der Sonar-Empfangsanlage unter dem gemessenen Peilwinkel angesetzt. Die so geschätzten x-y-Komponenten werden nach der Zeit differenziert. Außerdem wird der Betrag der geschätzten x-y-Komponenten gebildet.

Das Produkt der x-Komponente multipliziert mit ihrer zeitlichen Ableitung zuzüglich dem Produkt der y-Komponente multipliziert mit ihrer zeitlichen Ableitung wird durch den mit der Schallgeschwindigkeit multiplizierten Betrag der x-y-Komponten geteilt und bildet eine Quotientenfunktion, die gleich der Dopplerverschiebung der geschätzten Sendefrequenz einer vom Ziel abgestrahlten Schallwelle ist. Die geschätzte Sendefrequenz weist einen Sendefrequenzfehler auf. Die geschätzte Dopplerfrequenz wird aus der Differenz der mit dem Sendefrequenzfehler behafteten geschätzten Sendefrequenz abzüglich ihrem Produkt mit der Quotientenfunktion bestimmt. Der Vorteil der Zielschätzung nach Anspruch 9 besteht darin, daß bei der Minimierung der Frequenzdifferenz der Empfangsfrequenz von der geschätzten Dopplerfrequenz die aus möglichen Geschwindigkeitskomponenten geschätzte Zielposition zugrunde gelegt wird. Diese Geschwindigkeitskomponenten entsprechen unter Berücksichtigung der Peilung zum Ziel einer radialen Geschwindigkeitskomponente, die ihrerseits die Dopplerverschiebung der Sendefrequenz des Ziels bewirkt. Durch die Bestimmung und Hinzuziehung der Empfangsfrequenz bestehen die drei entscheidenden Vorteile, nämlich die Möglichkeiten, eine erste Zielposition ohne Eigenmanöver zu bestimmen, mehrere Ziele und ihre Zieldaten unter der gleichen Peilung zu trennen und zu bestimmen sowie Konvergenzzeiten für die Zielpositionsschätzungen zu verkürzen.

Die Wegkomponentenfehler und Geschwindigkeitskomponentenfehler sowie der Sendefrequenzfehler bilden einen Fehlervektor. Nach der vorteilhaften Weiterbildung des erfindungsgemäßen Verfahrens nach Anspruch 10 wird die geschätzte Dopplerfrequenz in eine Taylorreihe nach diesem Fehlervektor entwickelt, deren erstes Glied gleich der gemessenen Empfangsfrequenz ist und deren zweites Glied gleich dem Produkt aus Fehlervektor und Frequenzkoeffizienten ist. Alle weiteren Glieder höherer Ordnung sind vernachlässigbar klein. Die Frequenzkoeffizienten werden durch partielle Differentiation der Quotientenfunktion nach dem Fehlervektor bestimmt. Durch diese Taylorreihenentwicklung ergibt sich ein lineares Schätzmodell, das die Frequenzabweichung zwischen gemessener Empfangsfrequenz und geschätzter Dopplerfrequenz in Abhängigkeit von Fehlern der Eigenposition, Weg- und Geschwindigkeitskomponentenfehlern der x-y-Koordinaten des Ziels und Fehlern der Sendefrequenz angibt. Dieses lineare Schätzmodell kann in Matrizen-Schreibweise dargestellt werden.

Gemäß der vorteilhaften Weiterbildung des erfindungsgemäßen Verfahrens nach Anspruch 11 wird die Peilwinkelschätzung aus den geschätzten x-y-Komponten des Ziels bestimmt, indem ausgehend von der Anfangsposition zu jeder x-y-Komponente der Wegfehler und der geschwindigkeitsabhängiger Wegterm mit Geschwindigkeitskomponentenfehlern addiert werden. Aus den geschätzten x-y-Komponenten wird durch trigonometrische Verknüpfung der Arcustangens des geschätzten Peilwinkels ermittelt. Über eine Taylorreihenentwicklung dieser Arcustangensfunktion wird ein linearer Zusammenhang zwischen der Abweichung zwischen gemessenem Peilwinkel und geschätztem Peilwinkel und den Weg- und Geschwindigkeitskomponentenfehlern hergestellt. Teilkoeffizienten für die Reihenentwicklung werden durch partielle Differentiation dieser trigonometrischen Funktion nach den Wegfehlern und Geschwindigkeitskomponentenfehlern ermittelt. Die Reihenentwicklung wird nach dem ersten Glied abgebrochen und liefert eine Teilkoeffizienten-Matrix, deren Teilkoeffizienten durch ein adaptives Filter ermittelt werden, wie es beispielsweise in DE 34 46 658 C2 beschrieben ist. Durch Multiplikation mit einem Fehlervektor, der hier aus den Weg- und Geschwindigkeitskomponentenfehlern besteht, erhält man die gesuchte Abweichung des gemessenen Peilwinkels vom geschätzten Peilwinkel.

Der Vorteil der Weiterbildung des erfindungsgemäßen Verfahrens nach Anspruch 11 besteht darin, daß der hier betrachtete Fehlervektor der gleiche wie bei der Schätzung der Dopplerfrequenz ist, nur wird hier kein Sendefrequenzfehler berücksichtigt. Die über die Taylorreihenentwicklungen ermittelte Frequenzdifferenz und Peilwinkeldifferenz werden summiert und das Minimum der Summe iterativ bestimmt, das die Zieldaten liefert.

Der Vorteil des erfindungsgemäßen Verfahrens nach Anspruch 12 besteht darin, daß durch eine Mittelwertbildung der gemessenen und geschätzten Peilwinkel systematische Peilfehler nicht in die Bestimmung der Zieldaten eingehen. Diese systematischen Peilfehler treten beispielsweise auf, wenn Trägerfahrzeug und Ziel sich nicht in der gleichen Peilebene, z.B. der Horizontalebene, befinden und die einfallenden Schallwellen dagegen einen Winkel, z.B. Elevationswinkel, aufweisen. Mit der Sonar-Empfangsanlage wird dann eine Schalleinfallsrichtung gemessen, die der Projektion der räumlichen Einfallsrichtung auf die Peilebene entspricht. Dieser systematische Peilfehler ist auch in den geschätzten Peilwinkeln enthalten. Indem jeweils der Peilwinkel-Mittelwert und der Schätzwinkel-Mitterwert gebildet werden und von den jeweiligen gemessenen und geschätzten Peilwinkeln abgezogen werden, wird auch dieser systematische Peilfehler von jedem gemessenen und geschätzten Peilwinkel abgezogen, so daß bei der Suche des Minimums der quadratischen Abweichungen der systematische Peilfehler nahezu nicht mehr beteiligt ist.

Der besondere Vorteil des erfindungsgemäßen Verfahrens nach Anspruch 12 besteht darin, daß es gleichgültig ist, ob dieser systematische Peilfehler durch einen Elevationswinkel hervorgerufen wird oder beispielsweise durch Kompaßfehler oder Meßfehler einer an Bord des Trägerfahrzeugs befindlichen Navigationsanlage zum Bestimmen der Eigenposition. Weiterhin von Vorteil ist es, daß systematische Peilfehler durch Mehrwegeausbreitung der Schallwellen vom Ziel aufgrund von Reflexionen an der Oberfläche und/oder am Boden des Meeresgebiets oder an Wasserschichtungen ebenfalls nicht in die Bestimmung der Zieldaten eingehen. Unbekannte Schräglagen der Wandleranordnung der Sonar-Empfangsanlage durch Wasserströmungen führen ebenfalls nicht zu einer fehlerhaften Bestimmung der Zieldaten, obwohl sie die Bestimmung der Eigenposition verfälschen und systematische Peilfehler bei der Bestimmung des Peilwinkels hervorrufen. Diese verbesserte Bestimmung der Zielposition ist auch dann gewährleistet, wenn ein systematischer Peilfehler nicht ständig auftritt. Bei der Ermittlung der Koeffizienten-Matrix wird nun eine Arcustangensfunktion und der Mittelwert der Arcustangensfunktion zugrundegelegt, wobei jeder Koeffizient aus dem Teilkoeffizienten und seinem Mittelwert besteht. Durch Multiplikation mit dem Fehlervektor erhält man die gesuchte Abweichung der Differenz aus gemessenem Peilwinkel abzüglich seinem Peilwinkel-Mittelwert und geschätzten Peilwinkel abzüglich seinem Schätzwinkel-Mittelwert, die keinen systematischen Fehler mehr aufweist.

Durch die Mittelwertbildung der Teilkoeffizienten und die Differenzbildung zu den aktuellen Teilkoeffizienten wird ein systematischer Fehler bei der Peilwinkelbestimmung eliminiert.

Die Erfindung ist anhand der Zeichnung in einem Ausführungsbeispiel für ein Verfahren zum passiven Bestimmen von Zieldaten mit einer Sonar-Empfangsanlage näher beschrieben. Es zeigen:

Fig. 1                     ein Szenario für die Bestimmung von Zieldaten,

Fig. 2                     ein x-y-Koordinatensystem mit Zieldaten,

Fig. 3                     ein Frequenzdiagramm,

Fig. 4                     Fehlerplots für eine Zieldatenbestimmung ohne Manöver,

Fig. 5                     Fehlerplots, für eine Zieldatenbestimmung bei vorhandenem systematischen Peilfehler,

Fig. 6                     ein Blockschaltbild,

Fig. 7                     zeitlicher Verlauf einer in See gemessenen Empfangsfrequenz,

Fig. 8 a-d               Zieldatenplots, basierend auf Meßdaten mit einer Schleppantenne,

Fig. 9 und Fig. 10       Frequenzen von gemessenen Spektrallinien und einer Kunstspektrallinie über der Zeit,

Fig. 11                   Zieldatenplots, basierend auf Meßdaten einer Schleppantenne mit Eigenmanövern.

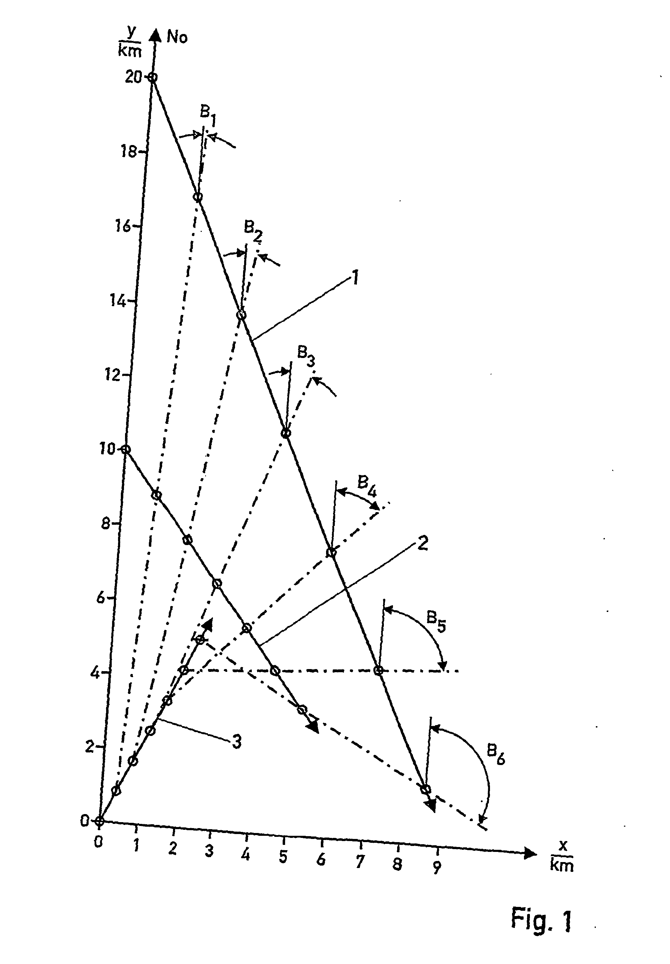

Fig. 1 zeigt ein Szenario für die passive Bestimmung von Zieldaten. Mit einer elektronischen Wandleranordnung, z.B. einer Linearantenne oder einer Schleppantenne, einer Sonar-Empfangsanlage an Bord eines Trägerfahrzeugs wird ein von zwei Zielen abgestrahltes Geräusch aus der gleichen Einfallsrichtung empfangen und Peilwinkel $B_i$ gemessen. Das eine Ziel befindet sich auf einem Kurs 1, das zweite Ziel auf einem Kurs 2, die in einem x-y-Koordinatensystem dargestellt sind. Zur Zeit $t_0$ befindet sich das Trägerfahrzeug im Ursprung 0/0 und die Ziele unter einem Peilwinkel in Richtung der y-Achse, die gleichzeitig die Nordrichtung No als Bezugsrichtung angibt. Zum Zeitpunkt $t_1$ ist das Trägerfahrzeug auf seinem Kurs 3 mit konstanter Eigengeschwindigkeit, das eine Ziel auf seinem Kurs 1 mit einer Geschwindigkeit $v_1$ und das andere Ziel auf seinem Kurs 2 mit der Geschwindigkeit $v_2$ zu den nächsten Zielpositionen gefahren. Der gemessene Peilwinkel $B_{1mess}$ zu beiden Zielpositionen ist gleich und wird für eine erste Schätzung der Zieldaten $x_{est}$, $y_{est}$ verwendet.

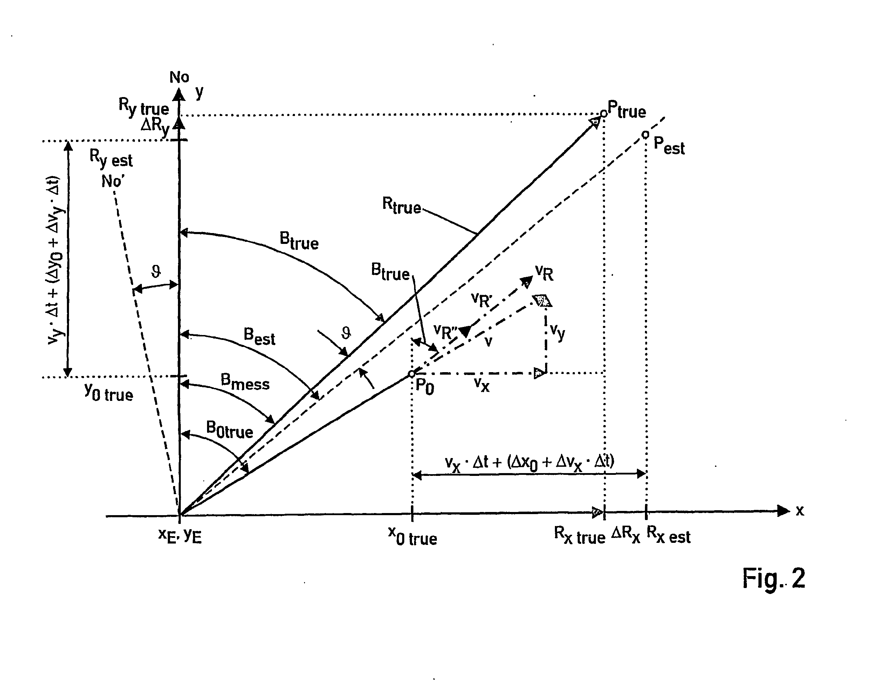

Fig. 2 zeigt das x-y-Koordinatensystem aus Fig. 1 zu einem Zeitpunkt t. Das Trägerfahrzeug mit der Wandleranordnung befindet sich in der Eigenposition $x_E$, $y_E$, die zugleich den Ursprung des x-y-Koordinatensystems bildet. Zu diesem Zeitpunkt befindet sich das Ziel an der Position $P_{true}$. Es hat seine Anfangsposition $P_0$ bei den Koordinaten $x_{0true}$, $y_{0true}$ mit der Geschwindigkeit $v_{xtrue}$, $v_{ytrue}$ verlassen und die Wegkomponenten $v_{xtrue} \cdot \Delta t$ und $v_{ytrue} \cdot \Delta t$ zurückgelegt. Die neue wahre Position $P_{true}$ des Ziels führt zu der Messung eines Peilwinkels $B_{mess}$. Die neue Position $P_{true}$ wird durch eine geschätzte Position $P_{est}$ und Berechnen des zugehörigen geschätzten Peilwinkels $B_{est}$ iterativ durch Minimieren der Abweichung zwischen $B_{mess}$ und $B_{est}$ bestimmt.

Es wird angenommen, daß sich das Ziel von der Koordinate $x_{0true}$ mit einem Wegfehler $\Delta x_0$ zur Koordinate $R_{xest}$ in x-Richtung mit einer Geschwindigkeit $v_x$ und einem Geschwindigkeitskomponentenfehler $\Delta v_x$ in einem Zeitintervall $\Delta t$ bewegt. In y-Richtung hat sich das Ziel während des Zeitintervalls $\Delta t$ von der Koordinate $y_{0true}$ zur Koordinate $R_{yest}$ mit einem Wegfehler $\Delta y_0$ und einer Geschwindigkeit $v_{yest}$ mit einem Geschwindigkeitskomponentenfehler $\Delta v_y$ bewegt. Die Koordinaten des Ziels werden geschätzt zu:

$$R_{x\,est} = x_{0\,true} + v_x \cdot \Delta t + (\Delta x_0 + \Delta v_x \cdot \Delta t) = R_{x\,true} + \Delta R_x \qquad (A)$$

$$R_{y\,est} = y_{0\,true} + v_y \cdot \Delta t + (\Delta y_0 + \Delta v_y \cdot \Delta t) = R_{y\,true} + \Delta R_y \qquad (B)$$

mit den Fehlern $\Delta R_x$, $\Delta R_y$. Nach Umformung erhält man

$$R_{xtrue} = R_{xest} - \Delta R_x = R_{xest} - (\Delta x_0 + \Delta v_x \cdot \Delta t) \qquad (a)$$

$$R_{ytrue} = R_{yest} - \Delta R_y = R_{yest} - (\Delta y_0 + \Delta v_y \cdot \Delta t) \qquad (b)$$

Daraus wird der geschätzte Peilwinkel $B_{est}$ berechnet:

$$B_{est} = \arctan \frac{R_{xest} - \Delta R_x}{R_{yest} - \Delta R_y} \qquad\qquad I$$

Die wahre Position $P_{true}$ ist bestimmt, wenn die Fehler $\Delta R_x = \Delta x_0 + \Delta v_x \cdot \Delta t$ und $\Delta R_y = \Delta y_0 + \Delta v_y \cdot \Delta t$ gleich Null sind. Dann sind die Geschwindigkeitskomponenten $v_x$ und $v_y$ richtig geschätzt, die zur Einnahme der neuen wahren Position $P_{true}$ des Ziels geführt haben. Der zugehörige geschätzte Peilwinkel $B_{est}$ ist gleich dem wahren Peilwinkel $B_{true}$ und beträgt:

$$B_{est} = B_{true} = \arctan \frac{x_{0true} + v_{xtrue} \cdot \Delta t - x_E}{y_{0true} + v_{ytrue} \cdot \Delta t - y_E} = B_{mess}$$

Die Zieldaten $P = (x_0, y_0, v_x, v_y)$ sind richtig geschätzt, wenn der Fehlervektor gleich Null ist:

$$\Delta P = (\Delta x_0,\ \Delta y_0,\ \Delta v_x,\ \Delta v_y) = 0 \text{ mit}$$

$$\Delta P_1 = \Delta x_0,\ \Delta p_2 = \Delta y_0,\ \Delta p_3 = \Delta v_x \text{ und } \Delta p_4 = \Delta v_y.$$

Für die Zieldatenbestimmung wird die Peilwinkeldifferenz zwischen geschätztem und gemessenem Peilwinkel minimiert:

$$(B_{iest} - B_{imess}) = \min$$

Die Zielposition $P_{true}$ ist bis auf einen Restfehler, der durch eine das Minimum bestimmende Schwelle festgelegt wird, bestimmt. Dann ist
$B_{iest} \approx B_{itrue}$

Das Einbeziehen einer geschätzten Dopplerfrequenz macht eine Positionsschätzung ohne Eigenmanöver durch gleichzeitiges Minimieren einer Frequenzdifferenz zwischen gemessener Empfangsfrequenz und geschätzter Dopplerfrequenz unter Berücksichtigung der Peilwinkelschätzung gemäß I möglich.

Das Ziel hat die Anfangsposition $P_0$ mit der Geschwindigkeit $v=v_1$ gemäß Fig. 2 verlassen. Bei Kenntnis des wahren Peilwinkels $B_{true}$ werden die Geschwindigkeitskomponenten $v_x$ und $v_y$ des Ziel in eine radiale Geschwindigkeitskomponente $V_R$ umgerechnet, die in die Richtung zwischen der Eigenposition $x_E$, $y_E$ und der wahren Zielposition $P_{true}$ weist.

$$V_R = V_R' + V_R'' = v_y \cdot \cos B_{true} + v_x \sin B_{true} \qquad (c)$$

Diese radiale Geschwindigkeitskomponente $V_R$ berücksichtigt die vorzeichenrichtig addierten radialen Geschwindigkeitskomponenten des Ziels $V_{RZ}$ und des Trägerfahrzeugs $V_{RE}$

$$V_R = V_{RE} - V_{RZ} \qquad (d)$$

Wegen der radialen Geschwindigkeitskomponente $V_R$ wird eine im Sendesignal oder im Geräusch des Ziels enthaltene und ausgesendete Sendefrequenz $F_{strue}$ frequenzverschoben und eine dopplerbehaftete Sendefrequenz als Empfangsfrequenz $F_{true}$ empfangen, wie im Kapitel 7.4 "Der Dopplereffekt", Seite 334, 335 in dem Lehrbuch "Experimentalphysik I ", 2. Teil, Edgar Lüscher, Hochschultaschenbuch, Bibliographisches Institut, Mannheim. 1967 beschrieben, gilt für die Dopplerfrequenz:

$$F_{true} = F_{strue}\left(\frac{c + V_{RE}}{c + V_{RZ}}\right)$$

Über eine Reihenentwicklung erhält man nach Einsetzen von Gl. (d) für die Empfangsfrequenz, die gleich der wahren dopplerbehafteten Sendefrequenz ist:

$$F_{true} = F_{strue}\left[1 - \frac{V_R}{c}\right] \qquad (XX)$$

Die Empfangsfrequenz ist abhängig von einer Quotientenfunktion, die proportional der radialen Geschwindigkeitskomponente $V_R$ ist:

$$Q = \frac{V_R}{c} \qquad (XXI)$$

Die radiale Geschwindigkeitskomponente $V_R$ ist gemäß Gleichung (c) abhängig von den Geschwindigkeitskomponenten in x- und y-Richtung $v_x$ und $v_y$ und vom Peilwinkel $B_{true}$:

$$V_R = V_R' + V_R'' = v_y \cdot \cos B_{true} + v_x \sin B_{true} \qquad (c)$$

Die Geschwindigkeitskomponenten $v_x$ und $v_y$ sich gleich der zeitlichen Änderung der x-y-Koordinaten des Ziels:

$$v_x = \frac{dR_{xtrue}}{dt} = \dot{R}_{xtrue}$$

$$v_y \cong \frac{dR_{ytrue}}{dt} \cong \dot{R}_{ytrue}$$

Mit den Gleichungen (a) und (b) erhält man:

$$v_x = \dot{R}_{xtrue} = \dot{R}_{xest} - \Delta\dot{R}_x \qquad (e)$$

$$v_y = \dot{R}_{ytrue} = \dot{R}_{yest} - \Delta\dot{R}_y \qquad (f)$$

Unter Hinzuziehung des wahren Peilwinkels $B_{true}$ zwischen der Bezugsrichtung $N_0$ und der Richtung zur wahren Zielposition $P_{true}$

$$\sin B_{true} = \frac{R_{xtrue}}{R_{true}} \qquad (g)$$

$$\cos B_{true} \cong \frac{R_{ytrue}}{R_{true}} \qquad (h)$$

erhält man mit den Gleichungen (a) und (b) für die wahre Entfernung $R_{true}$ zum Ziel

$$R_{true} = \sqrt{R_x^2{}_{true} + R_y^2{}_{true}}$$

$$R_{true} = \sqrt{(R_{xest} - \Delta R_x)^2 (R_{yest} - \Delta R_y)^2} \qquad (i)$$

dabei ist

$$\Delta R_x = \Delta x_0 + \Delta v_x \cdot \Delta t$$

$$\Delta R_y = \Delta y_0 + \Delta v_x \cdot \Delta t.$$

In Gleichung (c) für die radiale Geschwindigkeitskomponente $V_R$ werden jetzt die Gleichungen (e), (f), (g), (h) und (i) eingesetzt, und man erhält für die Dopplerverschiebung die Quotientenfunktion

$$Q = \frac{V_R}{c} \qquad (XXI)$$

in Abhängigkeit vom Fehlervektor $\Delta P = (\Delta x_0, \Delta y_0, \Delta v_x, \Delta v_y)$

$$Q(\Delta P) = \frac{1}{c} \frac{\left(\dot{R}_{xest} - \Delta\dot{R}_x\right)\left(R_{xest} - \Delta R_x\right) + \left(\dot{R}_{yest} - \Delta\dot{R}_y\right)\left(R_{yest} - \Delta R_y\right)}{\sqrt{\left(R_{xest} - \Delta R_x\right)^2 + \left(R_{yest} - \Delta R_y\right)^2}}$$

$$(XXII)$$

Die Sendefrequenz $F_s$, die vom Ziel abgestrahlt wird, wird mit einem Fehler $\Delta F_s$ geschätzt.

$$F_{sest} = F_{strue} + \Delta F_s$$

$$F_{strue} = F_{sest} - \Delta F_s$$

und zusammen mit der Quotientenfunktion Q gemäß Gleichung XXII in die Gleichung XX für die Empfangsfrequenz, die gleich der wahren Dopplerfrequenz $F_{true}$ ist, eingesetzt.

$$F_{true} = \left(F_{sest} - \Delta F_s\right)\left[\ 1 - Q(\Delta x_0, \Delta y_0, \Delta v_x, \Delta v_y)\ \right] \qquad \text{(XXIII)}$$

Die Dopplerfrequenz $F_{true}$ wird mit einer Fehlerdifferenz $\Delta F$ als Fehler geschätzt.

$$F_{true} = F_{est} - \Delta F$$

und in Gleichung XXIII eingesetzt. Für jede Peilwinkelmessung i muß die Dopplerfrequenz aus der geschätzten Position ermittelt werden:

$$F_{iest} - \Delta F_i = G_i(\Delta P) = \left(F_{sest} - \Delta F_s\right)\left[\ 1 - Q(\Delta x_0, \Delta y_0, \Delta v_x, \Delta v_y)\ \right] \qquad \text{(XXIV)}$$

Der Fehlervektor $\Delta P$ ist um einen weiteren Fehlerterm $\Delta F_s$ für die Schätzung der Sendefrequenz $F_{sest}$ zu erweitern:

$$\Delta P_1 = \left(\Delta x_0, \Delta y_0, \Delta v_x, \Delta v_y, \Delta F_s\right) \qquad \text{(XXV)}$$

Um diesen Fehlervektor $\Delta P$ wird zum Schätzen der Dopplerfrequenz die Schätzgleichung XXIV in eine Taylorreihe entwickelt und nach dem zweiten Glied abgebrochen:

$$G_i(\Delta P) = G_i(\Delta P)\Big|_{\Delta P=0} + \sum_{1=1}^{5}\left[\frac{\partial G_i}{\partial \Delta P_1}\Big|_{\Delta P=0}\right]\cdot \Delta P_1 \qquad \text{(XXVI)}$$

Dabei ist die geschätzte Dopplerfrequenz $F_{iest}$ gleich der gemessenen Empfangsfrequenz $F_{imess}$ für $\Delta P=0$:

$$G_i(\Delta P)\Big|_{\Delta P=0} = F_{iest}\Big|_{\Delta P=0} = F_{imess} \qquad \text{(XXVII)}$$

Gleichung XXVII wird in Gleichung XXVI eingesetzt und man erhält für die geschätzte Dopplerfrequenz:

$$F_{iest} = \dot G_i(\Delta P) = F_{imess} + \sum_{1=1}^{5}\left[\frac{\partial G_i}{\partial \Delta P_1}\Big|_{\Delta P=0}\right]\cdot \Delta P_1$$

eine Summe, die gleich der gemessenen Empfangensfrequenz $F_{imess}$ zuzüglich der Frequenzdifferenz $\Delta F_i$ ist.

$$G_i(\Delta P) = F_{imess} + \Delta F_i = F_{iest}$$

$$\Delta F_i := F_{imess} - F_{iest}.$$

Zum Bestimmen der Dopplerfrequenz muß die Frequenzdifferenz $\Delta F_i$ minimiert werden:

$$\Delta F_i = \sum_{l=1}^{5} \left[ \frac{\partial G_i}{\partial \Delta P_l} \Big|_{\Delta P=0} \right] \cdot \Delta P_l \qquad (XXVIII)$$

$$\Delta F_i = \sum_{l=1}^{5} g_{il} \cdot \Delta P_l = F_{imess} - F_{iest} \qquad (IXXX)$$

Durch partielle Differentiation der Schätzgleichung XXIV, in welche die Quotientenfunktion Q($\Delta P$) entsprechend Gleichung XXII eingesetzt wird, nach dem Fehlervektor $\Delta P_1$ gemäß Gleichung XXV erhält man für die Frequenzkoeffizienten $g_{i1}$ folgende Beziehungen:

$$g_{i1} = \frac{F_{sest}}{c \cdot R_{iest}} \left[ \dot{R}_{xiest} - \frac{R_{xiest} \cdot (R_{xiest} \cdot \dot{R}_{xiest} + R_{yiest} \cdot \dot{R}_{yiest})}{x \cdot R_{iest}^2} \right] \quad XXXI$$

$$g_{i2} = \frac{F_{sest}}{c \cdot R_{iest}} \left[ \dot{R}_{yiest} - \frac{R_{yiest} \cdot (R_{xiest} \cdot \dot{R}_{xiest} + R_{yiest} \cdot \dot{R}_{yiest})}{x \cdot R_{iest}^2} \right] \quad XXXII$$

$$g_{i3} = \frac{F_{sest}}{c \cdot R_{iest}} R_{xiest} + g_{i1} \cdot \Delta t_i \qquad XXXIII$$

$$g_{i4} = \frac{F_{sest}}{c \cdot R_{iest}} R_{yiest} + g_{i2} \cdot \Delta t_i \qquad XXXIV$$

$$g_{i5} = \frac{R_{xiest} \cdot \dot{R}_{xiest} + R_{yiest} \cdot \dot{R}_{yiest}}{c \cdot R_{iest}} - 1 \qquad \qquad \text{XXXV}$$

Sämtliche Frequenzkoeffizienten $g_{i1}$ werden mit dem jeweiligen Fehler des Fehlervektors $\Delta P_1$ gemäß Gleichung IXXX multipliziert und die Frequenzdifferenz durch Schätzen der x-y-Koponenten der Position des Ziels zusammen mit der Peilwinkeldifferenz gemäß Gleichung I iterativ minimiert.

Der geschätzte Peilwinkel nach Gleichung I

$$B_{iest} = \arctan \frac{R_{xiest} - \Delta R_{xi}}{R_{yiest} - \Delta R_{yi}} \qquad \qquad \text{IV}$$

wird ebenfalls in eine Taylorreihe um den Fehlervektor $\Delta P_1 = (\Delta x_0, \Delta y_0, \Delta V_x, \Delta v_y)$ entwickelt, der zwar nicht den Frequenzfehler $\Delta F_s$ enthält, aber ansonsten gleich den in Gleichung XXV aufgegebenen Fehlervektor ist, und nach dem zweiten Glied abgebrochen:

$$B_{iest}(\Delta P) \doteq B_{iest}\Big|_{\Delta P=0} + \sum_{1=1}^{4} \frac{\partial B_{iest}}{\partial \Delta P_1}\Big|_{\Delta P=0} \cdot \Delta P_1$$

Mit

$$\frac{\partial B_{iest}}{\partial \Delta P_1}\Big|_{\Delta P=0} = h_{i1}$$

als Teilkoeffizienten erhält man:

$$B_{iest}(\Delta P) - B_{iest}\Big|_{\Delta P=0} \doteq \sum_{1=1}^{4} h_{i1} \cdot \Delta P_1, \qquad \qquad \text{V}$$

dabei ist der geschätzte Peilwinkel $B_{iest}$ gleich dem gemessenen Peilwinkel $B_{imess}$, wenn der Fehlervektor $\Delta P$ gleich Null ist.

$$B_{iest}\Big|_{\Delta P=0} = B_{imess} \qquad \qquad \text{VI}$$

Die Teilkoeffizienten $h_{i1}$ in Gleichung V werden durch partielle Differentiation des geschätzten Peilwinkels $B_{iest}$ gemäß IV nach den Wegfehlern und Geschwindigkeitskomponentenfehlern des Fehlervektors $\Delta P = (\Delta x_0, \Delta y_0, \Delta v_x, \Delta v_y)$ bestimmt:

$$h_{i1} = \left. \frac{\partial B_{iest}}{\partial \Delta x_0} \right|_{\Delta P=0} = \frac{\partial}{\partial x_0} \left[ \arctan \frac{R_{xiest} - \Delta R_{xi}}{R_{yiest} - \Delta R_{yi}} \right]$$

$$h_{i1} \cong \frac{- R_{yiest}}{\left( R_{xiest} \right)^2 + \left( R_{yiest} \right)^2} \qquad (1)$$

Die Differentiation nach $\Delta P_2 = \Delta y_0$ ergibt den Teilkoeffizienten:

$$h_{i1} = \left. \frac{\partial B_{iest}}{\partial \Delta y_0} \right|_{\Delta P=0} = \frac{R_{xiest}}{\left( R_{xiest} \right)^2 + \left( R_{yiest} \right)^2} \qquad (2)$$

Die Koeffizienten $h_{i3}$ und $h_{i4}$ erhält man durch partielle Differentiation nach den Geschwindigkeitskomponentenfehlern $\Delta v_x = \Delta P_3$, $\Delta v_y = \Delta P_4$ und Einsetzen von (1) und (2)

$$h_{i3} = \left. \frac{\partial B_{iest}}{\partial \Delta v_x} \right|_{\Delta P=0} \cong \Delta t_i \cdot h_{i1} \qquad (3)$$

$$h_{i4} = \left. \frac{\partial B_{iest}}{\partial \Delta v_y} \right|_{\Delta P=0} \cong \Delta t_i \cdot h_{i2} \qquad (4)$$

Die Teilkoeffizienten $h_{i3}$ und $h_{i4}$ sind gleich dem Produkt aus Zeitintervall $\Delta t_i$ und den vorher bestimmten Teilkoeffizienten $h_{i1}$ und $h_{i2}$.
Durch Einsetzen von (1), (2), (3), (4) in Gleichung V erhält man die Peilwinkeldifferenz D und deren Quadrat $\delta$:

$$\delta = \left[ B_{iest} - B_{imess} \right]^2 = \sum_{l=1}^{4} \left[ h_{i1} \cdot \Delta P_l \right]^2 \qquad VII$$

Die Schätzgleichung für die Zieldaten wird mit den Gleichungen VII und IXXX gebildet.
Mit jeder Messung und Schätzung i des Peilwinkels $B_{imess}$, $B_{iest}$ und Messung der Empfangsfrequenz $F_{imess}$ und Schätzung der Dopplerfrequenz $F_{iest}$ wird iterativ über $I_k$ Messungen und Schätzungen das Minimum bestimmt:

$$\sum_{i=1}^{l_k} \left(B_{imess} - B_{iest}\right)^2 + \left(F_{imess} - F_{iest}\right)^2 = \min$$

$$\sum_{i=1}^{l_k} \left[\sum_{l=1}^{4} \left[h_{il} \cdot \Delta P_l\right]^2 + \sum_{l=1}^{5} \left[g_{il} \cdot \Delta P_l\right]^2\right] = \min \qquad\qquad XXX$$

Die dem Minimum zugrundeliegenden geschätzten Zieldaten geben Position, Geschwindigkeit und Kurs des Ziels mit dem Zieldatenvektor $P = (x, y, v_x, v_y, F)$ an.

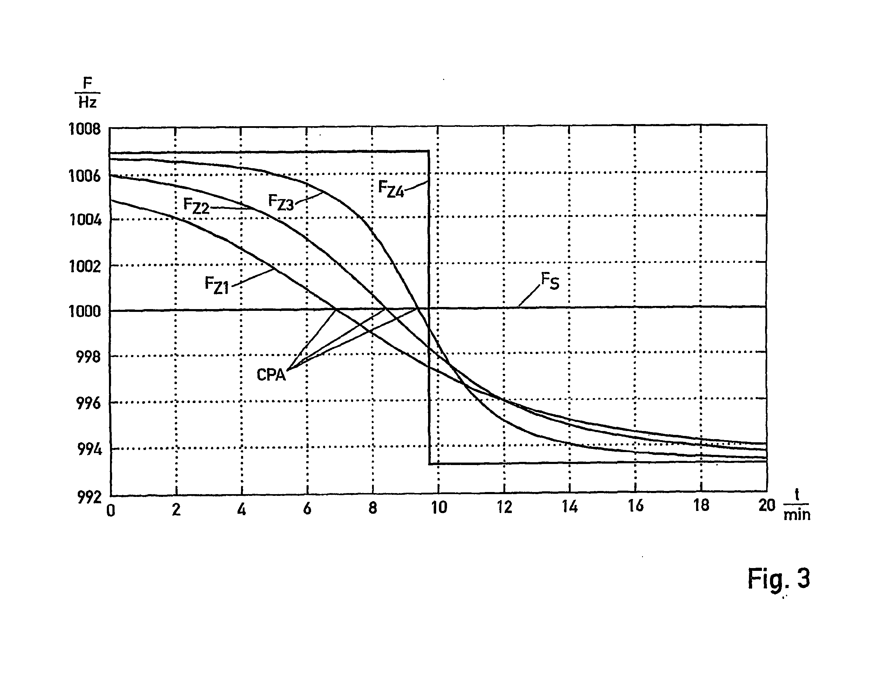

Fig. 3 zeigt ein Frequenzdiagramm mit Empfangsfrequenzen $F_{Z1}$, $F_{Z2}$ $F_{Z3}$, $F_{Z4}$ über der Zeit t von vier Zielen, die alle die gleiche Sendefrequenz $F_s$ = 1000 Hz abstrahlen. Jede Empfangsfrequenz $F_{Z1}$, $F_{Z2}$, $F_{Z3}$, $F_{Z4}$ setzt sich aufgrund der relativen, radialen Geschwindigkeitskomponente $V_R$ von Trägerfahrzeug und Ziel aus einem Zielanteil und einem Eigenanteil zusammen. Der Frequenzhub während des An- und Ablaufens des Ziels ist bei konstanter Fahrgeschwindigkeit jedes Ziels abhängig vom gemessenen Peilwinkel $B_{imess}$. An dem Ort, wo die Empfangsfrequenzen $F_{ZE1}$, $F_{ZE2}$, $F_{Z3}$, $F_{Z4}$ gleich der Sendefrequenz $F_s$ = 1000 Hz sind, ist die radiale Geschwindigkeitskomponente gleich Null und der Ort der nächsten Annäherung CPA erreicht. Für das erste Ziel $Z_1$ ist die Dopplerverschiebung der Sendefrequenz $F_S$ und damit der Frequenzhub der Empfangsfrequenz $F_{Z1}$ von 3 Hz und die Passierzeit des CPA von 7 min. am kleinsten. Für das vierte Ziel ist die Dopplerverschiebung und der Frequenzhub der Empfangsfrequenz $F_{Z4}$ am größten, da das vierte Ziel sich der empfangenden Wandleranordnung auf einem Kollisionskurs nähert. Der Frequenzhub entspricht der Quotientenfunktion Q gemäß Gleichung XXI und XXII bzw. der relativen, radialen Geschwindigkeitskomponente $V_R$ zwischen Ziel und Trägerfahrzeug.

Der Schätzgleichung XXX werden in jedem Zeitintervall $\Delta t$ gemessene Peilwinkel $B_{imess}$ und Empfangsfrequenzen $F_{imess}$ zugrundegelegt und daraus die Peilung, Entfernung, Geschwindigkeit und Kurs des Ziels als Zieldaten iterativ bestimmt.

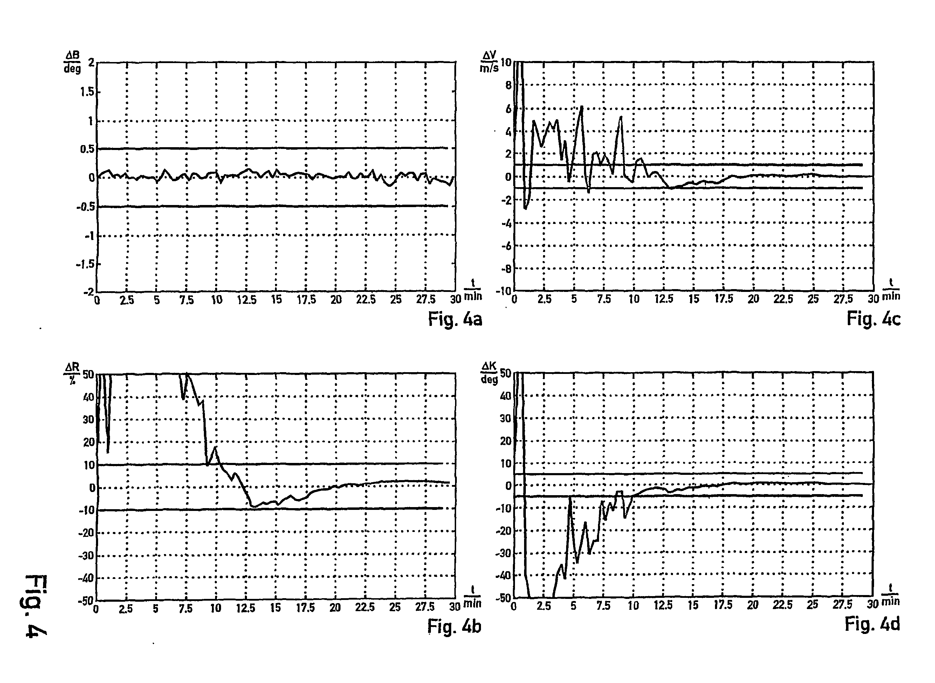

Fig. 4 gibt Fehlerplots für eine Zieldatenbestimmung an, bei der zu Beginn der Fahrt die Entfernung zum Ziel 20 km, die Peilung zum Ziel $B_0$ = 0° gegenüber der Nordrichtung $N_0$, die Geschwindigkeit 11,3 m/s = 22 kts, der Kurs des Ziels 155°, der Eigenkurs des Trägerfahrzeugs 25° und seine Geschwindigkeit 6 kts betragen.

Fig. 4a zeigt, daß die Peilfehler während der gesamten Fahrt innerhalb eines Fehlerschlauchs von $\pm$ 0,5° liegen. Der relative Entfernungsfehler $\Delta R/\%$ über der Zeit ist in Fig. 4b angegeben. Die Schätzung der Entfernung R konvergiert nach 15 min. und weist bei einer Mittelung über 20 Monte-Carlo-Runs nach 20 min. eine Streuung von weniger als $\pm$ 10 % auf, ohne daß ein Manöver gefahren wurde. Der Geschwindigkeitsfehler ist in Fig. 4c gezeigt, er liegt nach 17,5 min. bei einer Zielgeschwindigkeit von 11,3 m/s. in einem Fehlerschlauch von $\pm$ 1 m/s. Der Kurs ist bereits nach 10 min. stabil bestimmt und liegt in einem Fehlerschlauch von K = $\pm$ 10°, wie in Fig. 4d gezeigt.

Eine Verfälschung der Messung des Peilwinkels $B_{imess}$ durch einen systematischen Peilfehler $\vartheta$ wird durch Einbeziehung einer Mittelwertbildung der gemessenen und geschätzten Peilwinkel während der Fahrt des Trägerfahrzeugs mit konstantem Kurs und konstanter Geschwindigkeit längs eines sog. Eigenlegs eliminiert. Dieser systematische Peilfehler $\vartheta$ tritt beispielsweise dann auf, wenn die Bezugsrichtung No' z.B. durch fehlerhafte Lagebestimmung der Wandleranordnung nicht exakt in die Nordrichtung No weist, wie in Fig. 2 gezeigt. Der systematische Peilfehler $\vartheta$ kann durch Fehler in der Kompaßanzeige, durch Schalleinfall in einem Neigungswinkel zur Peilebene oder bei Verwendung einer Schleppantenne durch Wasserströmungen oder Strömungseinflüsse des Propellers des schleppenden Trägerfahrzeugs hervorgerufen werden. Der Peilwinkel $B_{imess}$ wird jetzt gegen die fehlerhafte Nordrichtung $N_{0'}$ gemessen und ist um den Peilfehler $\vartheta$ zu groß.

Zur Eliminierung des systematischen Peilwertes $\vartheta$, wird ein Peilwinkelmittelwert über $l_k$ Messungen des Peilwinkels $B_{imess}$ gebildet, die im Abstand des Zeitintervalls $\Delta t_i$ gemessen werden.

$$\overline{B_{imess}}^k = \frac{1}{l_k} \sum_{i=1}^{l_k} B_{imess}$$

und ein Schätzwinkel-Mittelwert des geschätzten Peilwinkels $B_{iest}$ gemäß Gleichung I gebildet:

$$\overline{B_{est}}^{k} = \frac{1}{l_k} \sum_{i=1}^{l_k} \arctan \frac{R_{xiest} - \Delta R_{xi}}{R_{yiest} - \Delta R_{yi}} = \overline{\arctan \overline{\frac{R_{xest} - \Delta R_x}{R_{yest} - \Delta R_y}}}^{k}$$

$$\underline{\underline{II}}$$

.

Anschließend wird als Schätzdifferenzwert die Differenz aus dem aktuell geschätzten Peilwinkel $B_{iest}$ nach Gleichung I und dem Schätzwinkel-Mittelwert $\overline{B_{est}}^{k}$ gemäß Gleichung II je Eigenleg k gebildet:

$$F_i^k = B_{iest} - \overline{B_{est}}^{k} \qquad\qquad \underline{\underline{III}}$$

$$F_i^k = \arctan \frac{R_{xiest} - \Delta R_{xi}}{R_{yiest} - \Delta R_{yi}} - \overline{\arctan \overline{\frac{R_{xest} - \Delta R_x}{R_{xest} - \Delta R_y}}}^{k} \qquad IV$$

.

Der Schätzdifferenzwert $F_i^k$ wird in eine Taylorreihe um dem Fehlervektor $\Delta P_1 = (\Delta x_0, \Delta y_0, \Delta v_x, \Delta v_y)$ entwickelt und nach dem zweiten Glied abgebrochen:

$$F_i^k(\Delta P) = F_i^k \big|_{\Delta P=0} + \sum_{1=1}^{4} \frac{\partial F_i^k}{\partial \Delta P_1} \big|_{\Delta P=0} \cdot \Delta P_1$$

Mit

$$\frac{\partial F_i^k}{\partial \Delta P_1} \big|_{\Delta P=0} = \gamma_{i1}^k$$

als Koeffizienten erhält man:

$$F_i^k(\Delta P) - F_i^k \big|_{\Delta P=0} \cong \sum_{1=1}^{4} \gamma_{i1} \cdot \Delta P_1, \qquad\qquad V$$

dabei ist

$$F_i^k\big|_{\Delta P=0} = B_{imess} - \overline{B_{mess}}^k \qquad\qquad VI$$

der Meßdifferenzwert aus aktuell gemessenem Peilwinkel $B_{imess}$ und dem Peilwinkel-Mittelwert aller auf einem Eigenleg k gemessenen Peilwinkel $B_{mess}$. Die Koeffizienten $\gamma_{i1}^k$ in Gleichung V werden durch partielle Differentiation des Schätzdifferenzwerts $F_i$ gemäß IV nach den Wegfehlern und Geschwindigkeitskomponentenfehlern des Fehlervektors $\Delta P = (\Delta x_0, \Delta y_0, \Delta v_x, \Delta v_y)$ bestimmt. Die Koeffizienten $\gamma_{i1}^k$ setzen sich aus den Teil-Koeffizienten $h_{i1}^k$ und dem zugehörigen Mittelwert $\overline{h_1}^k$ zusammen. Die Teilkoeffizienten $h_{i1}$ sind in den Gleichungen (1), (2), (3), (4) abgeleitet worden. Die koeffizienten lauten:

$$\gamma_{i1}^k = h_{i1}^k - \overline{h_1}^k \qquad\qquad (5)$$

$$\gamma_{i2}^k = h_{i2}^k - \overline{h_2}^k \qquad\qquad (6)$$

$$\gamma_{i3}^k = \Delta t_i \left[ h_{i1}^k - \overline{h_1}^k \right] \qquad\qquad (7)$$

$$\gamma_{i4}^k = \Delta t_i \left[ h_{i2}^k - \overline{h_2}^k \right] \qquad\qquad (8)$$

Durch Einsetzen der Koeffizienten $\gamma_{i1}$ in Gleichung V erhält man die Differenz aus dem Schätzdifferenzwert $F_i^k$ gemäß III und dem Meßdifferenzwert $F_i^k\big|_{\Delta P=0}$ gemäß VI als Peilwinkeldifferenz:

$$D_1 = \left\{ \left[ B_{iest} - \overline{B_{est}}^k \right] - \left[ B_{imess} - \overline{B_{mess}}^k \right] \right\}^2 = $$
$$= \sum_{l=1}^4 \left\{ \left[ h_{i1}^k - \overline{h_1}^k \right] \cdot \Delta P_1 \right\}^2 \qquad\qquad VIII$$

Die Peilwinkeldifferenz gemäß Gleichung VIII und die Frequenzdifferenz gemäß Gleichung IXXX werden der Zieldatenbestimmung zugrundegelegt und über $I_k$ Messungen und Schätzungen iterativ eliminiert:

$$\sum_{i=1}^{l_k} \left\{ \left[ \left[ B_{imess} - \overline{B_{mess}}^k \right] - \left[ B_{iest} - \overline{B_{est}}^k \right] \right]^2 + \left[ F_{imess} - F_{iest} \right]^2 \right\} = \qquad XI$$

$$= \sum_{i=1}^{l_k} \sum_{l=1}^{4} \left\{ \left[ h_{il}^k - \overline{h_l}^k \right] \cdot \Delta P_l \right\}^2 + \sum_{-=1}^{5} \left[ g_{il} \cdot \Delta P \right]^2 \right\} = min$$

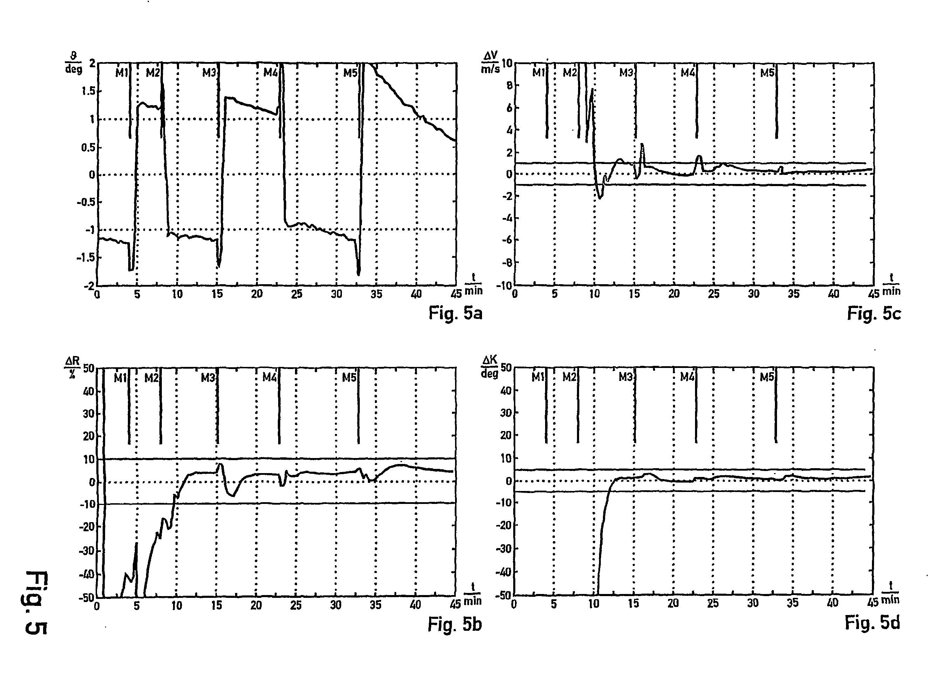

Fig. 5 zeigt Fehlerplots bei einer Schätzung der Zieldaten gemäß Gleichung VIII, bei dem vom Trägerfahrzeug Eigenmanöver gefahren werden müssen, da keine Frequenzmessungen und Schätzungen zut Zieldatenanalyse hinzugezogen wurden.

Fig. 5a zeigt über der Zeit t den systematischen Peilfehler $\vartheta$. Er beträgt während des Durchfahrens eines ersten Eigenlegs ungefähr 1,2°. Das erste Eigenmanöver M1 ist dadurch gekennzeichnet, daß der Peilfehler von -1,2° auf + 1,2° nach Abschluß des Manövers und durchfahren des zweiten Eigenlegs gesprungen ist. Beim nächsten Eigenmanöver M2 nach 8 min springt der Peilfehler auf ca. -1,2° und bleibt unverändert während der Messungen längs des nächsten Eigenlegs. Die Eigenmanöver M1, M2, ...M5 sind jeweils durch senkrechte Striche im oberen Bereich des Fehlerplots angegeben und durchnumeriert.

Nach 15 min und drei Eigenmanövern sind Entfernungsfehler $\Delta R/\%$ gemäß Fig. 5b, Geschwindigkeitsfehler $\Delta v/m/s$ gemäß Fig. 5c und Kursfehler K daß gemäß Fig. 5d innerhalb eines üblichen Fehlerschlauchs.

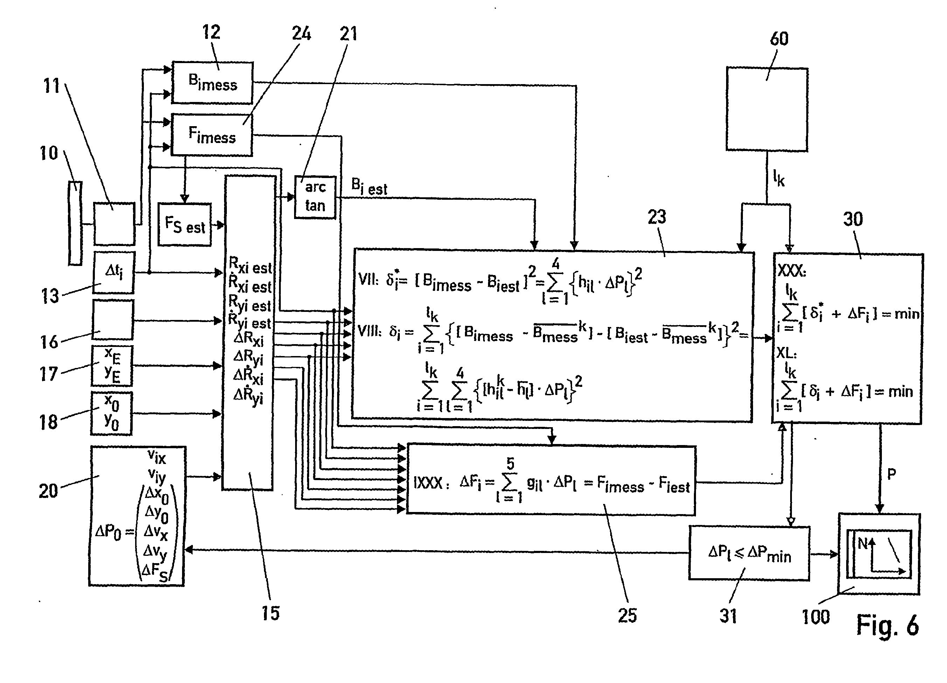

Fig. 6 zeigt ein Blockschaltbild einer Sonar-Empfangsanlage zum Bestimmen der Zieldaten P mit einer adaptiven Filteranordnung zur Auswertung gemessener Peilwinkel $B_{imess}$ und Empfangsfrequenzen $F_{imess}$. Empfangssignale einer Wandleranordnung 10 werden in einem Richtungsbildner 11 durch Laufzeit- oder Phasenkompensation zu Gruppensignalen zusammengefaßt und ein Ziel unter einem Peilwinkel $B_{imess}$ mit einer Meßschaltung 12 detektiert. Die Meßschaltung 12 wird von einer Steuerschaltung 13 im Abstand von Zeitintervallen $\Delta t_i$ angesteuert. Die gesamte Signalverarbeitung erfolgt im Abstand der Zeitintervalle $\Delta t_i$. Der Meßschaltung 12 ist eine Schätzschaltung 15 nachgeordnet, die als weitere Eingangsdaten die Nordrichtung aus einer Kompaßeinrichtung 16 als Bezugsrichtung $N_0$, die Eigenposition $x_E$ $y_E$ der Wandleranordnung 10 aus einer an Bord befindlichen Navigationsanlage 17, eine Anfangsposition $P_0 = (x_0, y_0)$ des Ziels aus einer Startzustandsschaltung 18, Geschwindigkeitskomponenten $v_{ix}$ und $v_{iy}$ in x- und y-Richtung sowie einen Fehlervektor $\Delta P_0 = (\Delta_{x0}, \Delta_{y0}, \Delta_{vx}, \Delta_{vy}, \Delta F_s)$ aus einer Schätzanordnung 20. Aus diesen Eingangsdaten werden in der Schätzschaltung 15 entsprechend den Schätzgleichungen (A) und (B) Wegkomponenten $R_{xiest}$, $R_{yiest}$ und Wegfehler $\Delta R_{xi}$, $\Delta R_{yi}$ geschätzt. Aus diesen Schätzwerten wird in einer Arcustangensschaltung 21 ein geschätzter Peilwinkel $B_{iest}$ gemäß Gleichung I berechnet.

In einer Peilwinkeldifferenzschaltung 23, die der Schätzschaltung 15 nachgeordnet ist, werden die von den geschätzten Wegkomponenten $R_{xiest}$, Ryiest und ihren Fehlern $\Delta R_x$, $\Delta R_y$ abhängigen Teilkoeffizienten $h_{i1}$ gemäß Gleichungen (1), (2), (3), (4), sowie deren Mittelwerte $h_1$ gebildet, um daraus die Koeffizienten $\gamma_{il}^k$ gemäß Gleichungen (5), (6), (7), (8) zu errechnen und zu Peilwinkeldifferenzen gemäß den Schätzgleichung VII und VIII zusammenfassen:

$$\dot{\delta}_i^* = \left[ B_{imess} - B_{iest} \right]^2 = \sum_{l=1}^{4} \left\{ h_{il} \cdot \Delta P_l \right\}^2 \qquad VII$$

$$\delta_i = \sum_{i=1}^{l_k} \left\{ \left[ B_{imess} - \overline{B_{mess}}^k \right] - \left[ B_{iest} - \overline{B_{est}}^k \right] \right\}^2 = \qquad VIII$$

$$\sum_{i=1}^{l_k} \sum_{l=1}^{4} \left\{ \left[ h_{il}^k - \overline{h_l}^k \right] \cdot \Delta P_l \right\}^2 = min$$

Über $i=l_k$ Messungen je Eigenleg, deren Zahl $l_k$ in einer Steuerschaltung 60 vorgegeben wird, werden die gemessenen und geschätzten Peilwinkel $B_{imess}$ und $B_{iest}$ ausgewertet. Die Zeitdauer $l_k \cdot \Delta t$ gibt die Filterlänge an.

Die Gruppensignale am Ausgang des Richtungsbildners 11 werden in einer Frequenzanalyse-Schaltung 24 analysiert. Die ermittelte Empfangsfrequenz wird einer Frequenzdifferenzschaltung 25 zugeführt, die der Schätzschaltung 15 nachgeordnet ist. Aus den geschätzten Wegkomponenten $R_{xiest}$, $R_{yiest}$ und ihren zeitlichen Änderungen $R_{xiest}$ und $R_{yiest}$ sowie den Fehlern $\Delta R_{xi}$, $\Delta R_{yi}$ und $\Delta R_{xi}$ und $\Delta R_{yi}$ wird die Frequenzdifferenz $\Delta F_i$ entsprechend der Schätzgleichung IXXX ermittelt:

$$\Delta F_i \equiv \sum_{l=1}^{5} g_{il} \cdot \Delta P_l \cong F_{imess} - F_{iest} \qquad (\text{IXXX})$$

Die Ausgänge der Peilwinkeldifferenzschaltung 23 und der Frequenzdifferenzschaltung 25 sind mit einer Iterationsschaltung 30 verbunden, in der iterativ das Minimum der Summe aus Peilwinkeldifferenz und Frequenzdifferenz oder ihrer quadrierten Differenzwerte entsprechend den Schätzgleichungen

$$\sum_{i=1}^{l_k} \left[ \sum_{l=1}^{4} \left[ h_{il} \cdot \Delta P_l \right]^2 + \sum_{l=1}^{5} \left[ g_{il} \cdot \Delta P_l \right]^2 \right] = \min \qquad (\text{XXX})$$

und

$$\sum_{i=1}^{l_k} \left\{ \left[ \left[ B_{imess} - \overline{B_{mess}}^k \right] - \left[ B_{iest} - \overline{B_{est}}^k \right] \right]^2 + \left[ F_{imess} - F_{iest} \right]^2 \right\} =$$

$$= \sum_{i=1}^{l_k} \sum_{l=1}^{4} \left\{ \left[ h_{il}^k - \overline{h_l}^k \right] \cdot \Delta P_l \right\}^2 + \sum_{l=1}^{5} \left[ g_{il} \cdot \Delta P \right]^2 \right\} = \min$$

$$(\text{XL})$$

gebildet wird. Die Minimierung wird solange durchgeführt, bis der Fehlervektor $\Delta P_1$ eine untere Schwelle $\Delta P_1$ kleiner gleich $\Delta P_{min}$ unterschreitet.

Zu jedem gemessenen Peilwinkel $B_{imess}$ werden in der Schätzschaltung 15 Wegkomponenten $R_{xest}$ und $R_{yest}$ sowie Wegfehler $\Delta R_x$ und $\Delta R_y$ solange ermittelt, bis der Fehlervektor $\Delta P_1$ eine untere Schwelle $\Delta P_1 \leq \Delta P_{min}$ unterschreitet. Bis auf einen durch die Schwelle festgelegten Restfehler sind dann der geschätzte Peilwinkel $B_{est}$ gleich dem wahren Peilwinkel $B_{true}$ und die geschätzten Weg- und Geschwindigkeitskomponenten $R_{xest}$, $R_{yest}$, $v_{xest}$, $v_{yest}$ gleich den wahren Weg- und Geschwindigkeitskomponenten $R_{ytrue}$, $R_{ytrue}$, $v_{xtrue}$, $v_{ytrue}$ und die geschätzte Dopplerfrequenz $F_{iest}$ gleich der wahren Dopplerfrequenz $F_{true}$. Die dafür eingesetzte Schwellenschaltung 31 ist der Iterationsschaltung 30 nachgeschaltet und steuert die Schätzanordnung 20 an. Bei Unterschreiten der Schwelle $\Delta P_{min}$ werden die Zieldaten P in einer Anzeige 100 dargestellt.

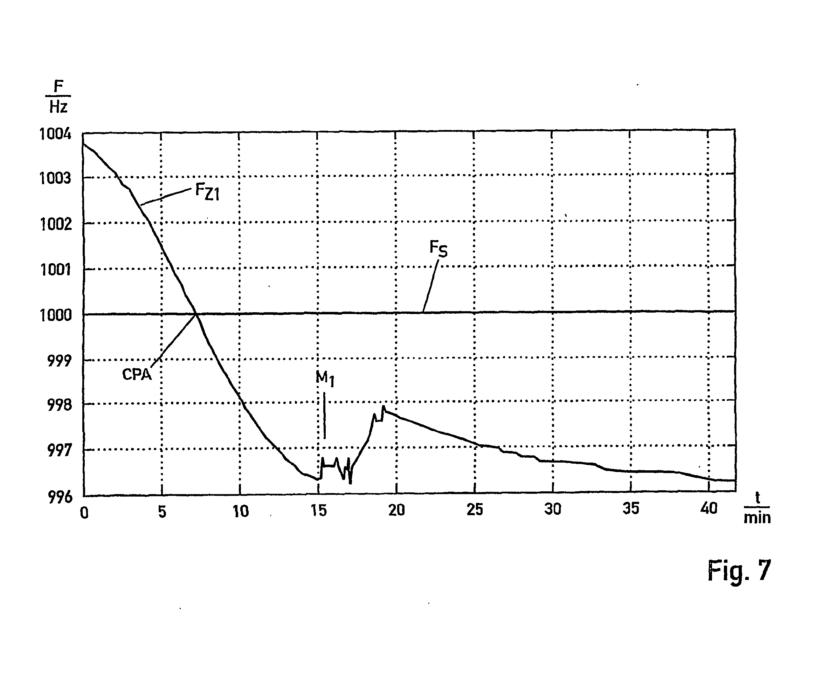

Fig. 7 zeigt den zeitlichen Verlauf der gemessenen Empfangsfrequenz $F_{z1}$ einer vom Ziel abgestrahlten Spektrallinie mit der Sendefrequenz $F_s$ = 1000 Hz, wenn mit dem Trägerfahrzeug der Wandleranordnung ein Eigenmanöver gefahren wird. Für die Messung ist das Manöver M1 der Schleppantenne maßgeblich, das zu einer Zeit t = 15 min eingeleitet wird, nachdem das Ziel zur Zeit t = 7,5 min den Ort größter Annäherung CPA erreicht hatte, bei dem die Empfangsfrequenz $F_{z1}$ gleich der Sendefrequenz $F_s$ ist. Zu Beginn der Messung betrug die Empfangsfrequenz $F_{z1}$ = 1003,8 Hz und nach 15 min 996,3 Hz. Zu diesem Zeitpunkt beginnt sich die Schleppantenne aufgrund des Eigenmanövers M1 zu drehen und die Empfangsfrequenz $F_{z1}$ steigt wieder auf 998 Hz an. Am Ende des Eigenmanövers nimmt die Empfangsfrequenz $F_{z1}$ über der Zeit t wieder ab.

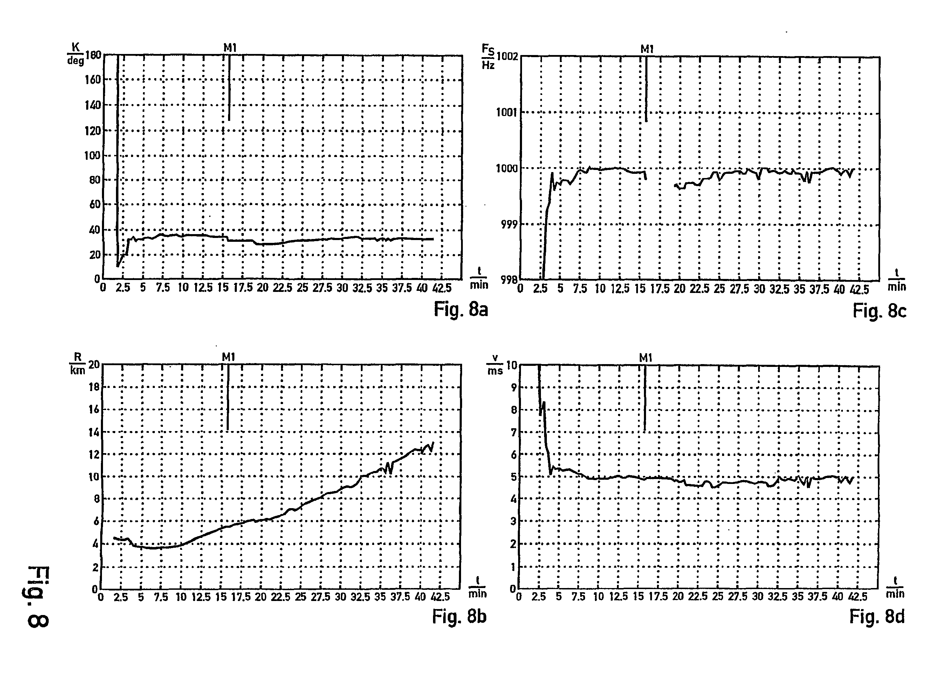

Die mit dem erfindungsgemäßen Verfahren unter Hinziehen des zeitlichen Verlaufs der Empfangsfrequenz $F_{Z1}$ gemäß Fig. 7 bestimmten Zieldaten sind den Diagrammen in Fig. 8 zu entnehmen. In dem zugrundeliegenden Szenario wird, wie Fig. 7 zeigt, nach 15 min das Eigenmanöver durchgeführt. Fig. 8a zeigt, daß bereits nach 3 min der Kurs des Ziels, der zwischen 28° und 34° liegt, stabil geschätzt wird. Fig. 8b zeigt die mit dem erfindungsgemäßen Verfahren geschätzte Entfernung R zum Ziel, die ebenfalls nach weniger als 2,5 min konvergiert. Man sieht, daß die Entfernung R innerhalb der ersten Minuten abnimmt und nach 7,5 min der CPA erreicht ist. Anschließend wird die Entfernung R zum Ziel wieder größer. Fig. 8c zeigt den Verlauf der geschätzten Sendefrequenz $F_s \approx 1000 Hz$ über der Zeit. Nach 15,5 min ist die Kurve unterbrochen, weil zu diesem Zeitpunkt das Eigenmanöver M1 der Schleppantenne eingeleitet wird und während dieses Kursmanövers M1 keine Meßdaten ausgewertet werden. Aus Fig. 8d ist ersichtlich, daß bereits nach 3 min die Geschwindigkeit $v_{/m/s}$ des Ziels sicher geschätzt wird, die zwischen 4,8 und 5,1 m/s schwankt.

Für die Ermittlung der Zieldaten in Fig. 8 wurde eine Filterlänge von 30 min benutzt, d.h. gemessene Peilwinkel $B_{imess}$ und Empfangsfrequenzen $F_{imess}$, die älter als 30 min sind, wurden nicht mehr verwendet. Die Zieldatenplots in Fig. 8 zeigen aber, daß durch Ausnutzen von Frequenzinformationen die Zieldaten in weniger als 5 min sicher geschätzt werden können, so daß man auch mit einer Filterlänge oder Zeitdauer von z.B. 5 min arbeiten kann. Das hat bei Zielmanövern den Vorteil, daß ohne Bedienungseingriff die Zieldaten 5 min nach dem Zielmanöver wieder sicher geschätzt werden können.

In der Frequenzanalyseschaltung 24 werden die Gruppensignale des mit der Wandleranordnung 10 empfangenen Geräuschs analysiert. Bei Einsatz einer linearen Seitenantenne oder einer Schleppantenne als Wandleranordnung 10 wird beispielsweise ein Lofargramm erstellt, bei dem tieffrequente Spektrallinien des empfangenen Geräusch erkannt und ihre Frequenzen $F_i$ bestimmt werden. Ebenfalls ist bei Verwendung einer Seitenantenne, einer sog. Flank-Array, eine Demon-Analyse der Richtcharakteristiksignale am Ausgang des Richtungsbildners 11 durchzuführen, bei der das empfangene Geräusch nach einer Bandpaßfilterung demoduliert wird. Die modulierende Frequenz wird analysiert und liefert Spektrallinien bei den gleichen Frequenzen wie das Lofargramm. Dieses Spektrum mit Grundfrequenz und ihren Harmonischen wird durch die Drehzahl des das Wasserfahrzeug antreibenden Propellers verursacht.

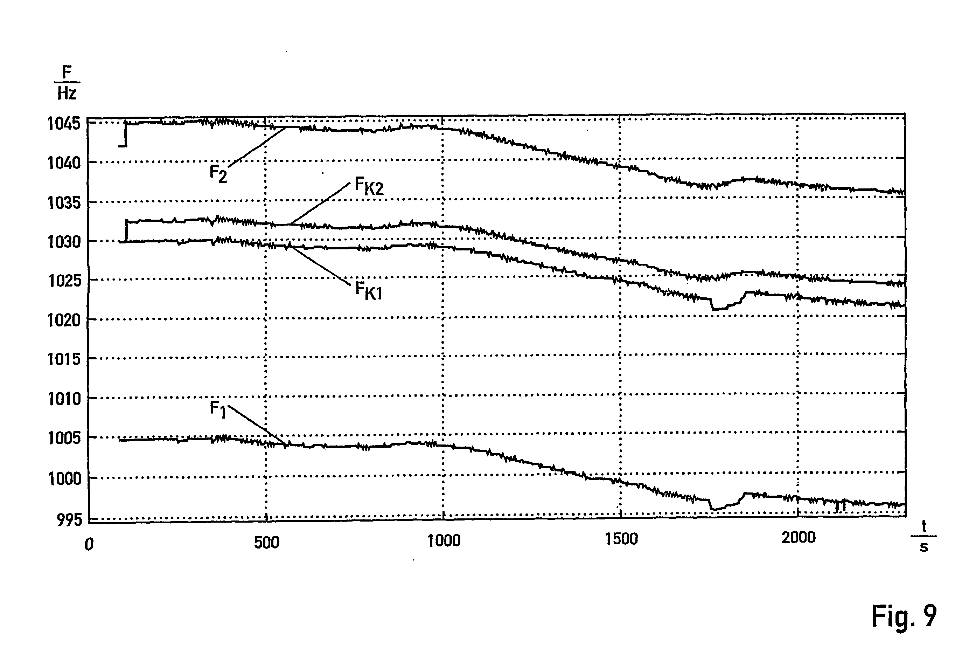

Die Spektralanalyse liefert zu Beginn des Szenarios beispielsweise gemessenen Frequenzen $F_1 = 1045$ Hz und $F_2 = 1005$ Hz zweier Spektrallinien. Ihren zeitlichen Verlauf zeigt Fig. 9. Beide gemessenen Frequenzen $F_1$ und $F_2$, die zu den unbekannten, abgestrahlten Sendefrequenzen $F_{S1} = 1000$ Hz und $F_{S2} = 1040$ Hz gehören, stammen vom gleichen Ziel und sind somit prozentual mit der gleichen Dopplerverschiebung behaftet. Sie werden zu einer Kunstspektrallinie zusammengefaßt und dann der Zieldatenanalyse zur Auswertung zugeführt. Die fiktive Spektralfrequenz der Kunstspektrallinie wird beispielsweise mit $F_{kunst} = 1030$ Hz festgelegt. Zur Ermittlung der Empfangsfrequenz $F_{imess}$ werden mehrere im Zeitabstand $\Delta t$ gemessenen Frequenzen $F_1$ erfaßt, zusammengefaßt und für gültig erklärt. Diese gültige Frequenz $F_{g1}$ wird zur Transformation der gemessenen Frequenzen $F_{1i}$ benutzt, indem die fiktive Spektralfrequenz $F_{kunst}$ durch die gültige Frequenz $F_{g1}$ geteilt und mit der momentan gemessenen Frequenz $F_{1i}$ multipliziert wird. So erhält man Frequenzwerte der auf die Kunstspektrallinie transformierten Frequenz $F_{k1}$ als Meßwerte der Empfangsfrequenz $F_{imess}$, die in sehr engen Grenzen um die fiktive Spektralfrequenz $F_{kunst} = 1030$ Hz schwanken.

$$F_{k1} = F_{imess} = \frac{F_{kunst}}{F_{g1}} \cdot F_{1i}$$

Die zweite gemessene Frequenz $F_2$ beträgt 1005 Hz und wird auf die gleiche fiktive Spektralfrequenz $F_{kunst} = 1030$ Hz umgerechnet, indem die fiktive Spektralfrequenz $F_{kunst} = 1030$ Hz durch die aus gültigen Messungen stammende Frequenz $F_{g2}$ geteilt und mit der momentan gemessenen Frequenz $F_{2i}$ multipliziert wird:

$$F_{k2} = F_{imess} = \frac{F_{kunst}}{F_{g2}} \cdot F_{2i}$$

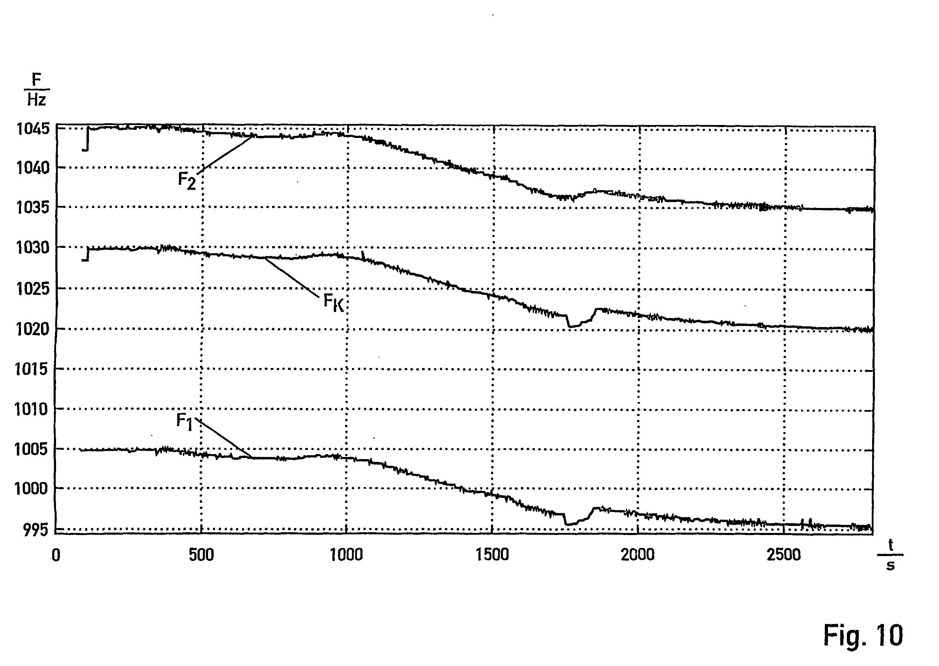

Fig. 9 zeigt neben den gemessenen Frequenzen $F_{1i}$ und $F_{2i}$ die transformierten Frequenzen $F_{k1}$ und $F_{k2}$ über der Zeit t, die einen Offset von ca. 2,7 Hz als Abweichung zueinander aufweisen. Die transformierte Frequenzen $F_{k2}$ wird um die mittlere Abweichung in Richtung der transformierten Frequenz $F_{k1}$ verschoben oder umgekehrt. Das Ergebnis zeigt Fig. 10. Der Verlauf der Spektralfrequenz $F_k$ wird als Empfangsfrequenz $F_{imess}$ der Zieldatenanalyse zugeführt.

Ergebnisse der Zieldatenanalyse unter Hinzuziehung der Spektralfrequenz $F_k$ als Empfangsfrequenz $F_{imess}$

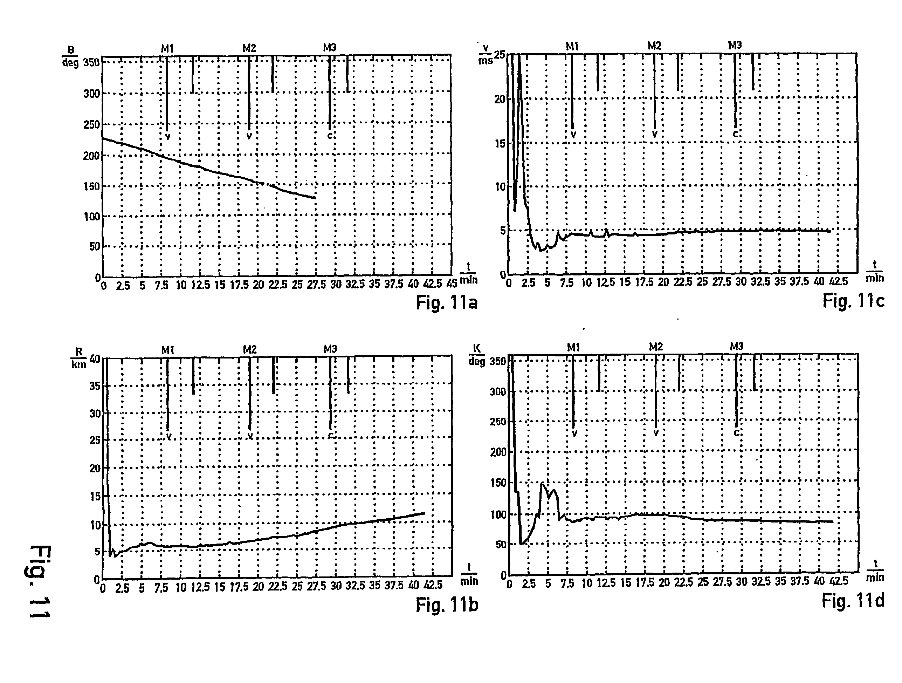

zeigen die Diagramme in Fig. 11. Fig. 11a zeigt den Peilwinkel B über der Zeit t/min. Bis zum ersten Manöver M1 nach 8 min sind bereits die ersten Entfernungsschätzungen zum Ziel stabil, wie Fig. 11b zeigt. Die Entfernung R zwischen Trägerfahrzeug mit Wandleranordnung und dem Ziel beträgt nach 5 min 7 km. Fig. 11c zeigt die Geschwindigkeit v/m/s des Ziels über der Zeit t, die ebenfalls nach 3 min stabile Werte von 3m/s bis 5m/s annimmt.

Nur der Kurs ist in dieser Zeit noch nicht klar bestimmbar, wie Fig. 11d zeigt. Aber auch bevor das erste Manöver M1 gefahren wird, ist der Kurs nach 7 min. sicher geschätzt. Nach 8 min. führt das Trägerfahrzeug ein Geschwindigkeitsmanöver M2 durch. Sämtlichen Zieldatenplots 11a - 11c ist zu entnehmen, daß dieses Geschwindigkeitsmanöver M2 die Zieldatenschätzung nicht stört, sondern die bisherigen Werte bestätigt. Nach 4 min ist das Manöver M2 beendet. Dieses Geschwindigkeitsmanöver M2 führt durch Veränderungen der radialen Geschwindigkeitskomponente $V_R$ zu einer Veränderung der Dopplerverschiebung und damit der Empfangsfrequenz $F_{imess}$. Diese Änderung macht sich nicht negativ bei der Zieldatenanalyse bemerkbar. Auch das zweite Geschwindigkeitsmanöver M2 nach 19 min. führt nicht zu einem Verlust der Zieldatenbestimmung. Nach 29 min führt das Trägerfahrzeug ein Kursmanöver durch, d. h. der fahrzeugbezogene Peilwinkel zum Ziel ändert sich und die Peilwinkeländerung ist sehr groß. Während dieser Zeit ist eine stabile Schätzung des Peilwinkels nicht möglich, wie die Lücke in der Kurve in Fig. 11a zu entnehmen ist. Nach Beendigung des Manövers M3 ist ab 32,5 min wieder eine stabile Schätzung des Peilwinkels gegeben. Dieses Kursmanöver M3 stört jedoch weder die Kursbestimmung k des Ziels gemäß Fig. 11d, noch die Entfernungsschätzung R gemäß Fig. 11b und auch nicht die Geschwindigkeitsbestimmung gemäß Fig. 11c.

Zusammenfassend ist festzustellen, daß aus den Zieldatenplots gemäß Fig. 11 deutlich hervorgeht, daß die ersten Zieldatenschätzungen ohne Eigenmanöver in einer Konvergenzzeit von weniger als 7 min. erreicht sind und daß Geschwindigkeits- und Kursmanöver vom Trägerfahrzeug die Konvergenzzeit der Zieldatenschätzung nicht verlängern.


**Patentansprüche**

1.    Verfahren zum passiven Bestimmen von Zieldaten durch richtungsselektiven Empfang von Schallwellen, die von einem Ziel abgestrahlt oder gesendet werden, mit einer elektroakustischen Wandleranordnung einer Sonar-Empfangsanlage auf einem Trägerfahrzeug aus geschätzten Peilwinkeln (Biest), die aus geschätzten Positionen des Ziels ermittelt werden, und gemessenen Peilwinkeln (Bimess), wobei die Peilwinkeldifferenz zwischen gemessenem und geschätztem Peilwinkel iterativ minimiert wird, **dadurch gekennzeichnet, daß** die unter einem Peilwinkel empfangenen Schallwellen einer Frequenzanalyse unterzogen werden und die Frequenz mindestens einer Spektrallinie als Empfangsfrequenz ($F_{imess}$) bestimmt wird, daß eine Frequenzdifferenz ($\Delta F_i$; $B_{imess}$-$B_{iest}$) zwischen der Empfangsfrequenz ($F_{imess}$) und einer geschätzten Dopplerfrequenz ($F_{iest}$) ermittelt wird, daß die geschätzte Dopplerfrequenz ($F_{iest}$) aus einer geschätzten vom Ziel abgestrahlten Sendefrequenz ($F_{sest}$) und einer Dopplerverschiebung (Q) aus geschätzten Zielpositionen ($R_{xiest}$, $R_{yiest}$), die auch zur Ermittlung des geschätzten Peilwinkels ($B_{iest}$) herangezogen werden, und deren zeitlichen Änderungen ($R_{xiest}$, $R_{yiest}$) in Peilrichtung bestimmt wird und daß eine Peilwinkeldifferenz ($\delta_i$; $\delta_i^*$; $B_{imess}$ - $B_{iest}$) als Differenz zwischen dem gemessenen Peilwinkel ($B_{imess}$) und dem geschätzten Peilwinkel ($B_{iest}$) ermittelt wird, und daß das Minimum der Summe aus Quadrat der Peilwinkeldifferenz $B_{imess}$ - $B_{iest}$ und Quadrat der Frequenzdifferenz $F_{imess}$ - $F_{iest}$ über die Anzahl $I_k$ aller gemessenen Peilwinkel iterativ gemäß folgender Formel bestimmt wird:

$$\sum_{i=1}^{l_k} \left[ \left( B_{imess} - B_{iest} \right)^2 + \left( F_{imess} - F_{iest} \right)^2 \right] = min$$

wobei die bei Erreichen des Minimums geschätzte Position die Zieldaten liefert.

2.    Verfahren nach Anspruch 1, **dadurch gekennzeichnet, daß** die Empfangsfrequenz mit einer Lofar-Analyse bestimmt wird.

3.    Verfahren nach Anspruch 1, **dadurch gekennzeichnet, daß** die Empfangsfrequenz mit einer Demon-Analyse bestimmt wird.

4.    Verfahren nach einem der Ansprüche 1 - 3, **dadurch gekennzeichnet, daß** gemessene Frequenzen mehrerer Spektrallinien zusammengefaßt werden und Meßwerte der Empfangsfrequenz ($F_{imess}$) bilden.

5. Verfahren nach Anspruch 4, **dadurch gekennzeichnet, daß** gemessene Frequenzen mehrerer Spektrallinien individuell auf Frequenzwerte einer fiktiven Spektralfrequenz einer gemeinsamen Kunstspektrallinie transformiert werden und Meßwerte der Empfangsfrequenz $F_{imess}$ bilden.

6. Verfahren nach Anspruch 5, **dadurch gekennzeichnet, daß** die fiktive Spektralfrequenz die gemessene Frequenz einer der empfangenen Spektrallinien ist.

7. Verfahren nach Anspruch 5, **dadurch gekennzeichnet, daß** Mittelwerte der transformierten Frequenzwerte Meßwerte der Empfangsfrequenz ($F_{imess}$) bilden.

8. Verfahren nach einem der Ansprüche 5 oder 6, **dadurch gekennzeichnet, daß** eine mittlere quadratische Abweichung aller transformierten Frequenzwerte von einem ausgewählten transformierten Frequenzwert berechnet wird und die transformierten Frequenzwerte um diese Abweichung verschoben werden und Meßwerte der Empfangsfrequenz ($F_{imess}$) bilden.

9. Verfahren nach einem der Ansprüche 1 - 8, **dadurch gekennzeichnet, daß** x-y-Komponenten ($R_{xiest}$ - $\Delta R_x$ ; $R_{yiest}$ - $\Delta R_y$) aus einer Anfangsposition ($x_0$, $y_0$) zuzüglich einem geschwindigkeitsabhängigen Wegterm [$(v_x + \Delta v_x) \cdot \Delta t$, $(v_y + \Delta v_y) \cdot \Delta t$)] mit Geschwindigkeitskomponentenfehlern ($\Delta v_x$, $\Delta v_y$) und Wegkomponentenfehlern ($\Delta x_0$, $\Delta y_0$) mit deren zeitlichen Ableitungen multipliziert werden und dieses Produkt durch den Betrag der x-y-Komponenten geteilt wird, und folgende Quotientenfunktion

$$Q(\Delta P) = \frac{1}{c} \frac{\left(\dot{R}_{xest} - \Delta \dot{R}_x\right)\left(R_{xest} - \Delta R_x\right) + \left(\dot{R}_{yest} - \Delta \dot{R}_y\right)\left(R_{yest} - \Delta R_y\right)}{\sqrt{\left(R_{xest} - \Delta R_x\right)^2 + \left(R_{yest} - \Delta R_y\right)^2}}$$

bildet, die gleich der Dopplerverschiebung ist, und wobei $\Delta P = (\Delta x_0, \Delta y_0, \Delta v_x, \Delta v_y)$ einen Fehlervektor und c die Schallgeschwindigkeit darstellt, daß die um einen Sendefrequenzfehler $\Delta F_s$ verminderte geschätzte Sendefrequenz $F_{sest}$ mit der Differenz aus eins und der Quotientenfunktion $Q(\Delta P)$ multipliziert wird und die um die Frequenzdifferenz $\Delta F_i$ fehlerhaft geschätzte Dopplerfrequenz angibt gemäß folgender Formel:

$$F_{iest} - \Delta F_i = \left(F_{sest} - \Delta F_s\right)\left[ 1 - Q\left(\Delta x_0, \Delta y_0, \Delta v_x, \Delta v_y\right) \right] \qquad (XXIII)$$

10. Verfahren nach Anspruch 9, **dadurch gekennzeichnet, daß** der Fehlervektor ($\Delta P$) aus den Wegkomponentenfehlern ($\Delta x_0$, $\Delta y_0$), den Geschwindigkeitskomponentenfehlern ($\Delta v_x$, $\Delta v_y$) und dem Sendefrequenzfehler ($\Delta F_s$) gebildet wird, daß die geschätzte Dopplerfrequenz ($F_{iest}$ - $\Delta F_i$) in eine Taylorreihe um den Fehlervektor ($\Delta P$) entwickelt wird, daß ihre Frequenzkoeffizienten durch partielle Differenziation nach dem Fehlervektor ($\Delta P$) bestimmt werden, ihr erstes Glied gleich der gemessenen Empfangsfrequenz ($F_{imess}$) ist und ihr zweites Glied gemäß unten stehender Formel gleich dem Produkt aus Frequenzkoeffizienten ($g_{i1}$) multipliziert mit dem Fehlervektor ($\Delta P$) ist und die Frequenzdifferenz ($\Delta F_i$) zur Bestimmung des Minimums bildet:

$$\Delta F_i = \sum_{l=1}^{5} g_{il} \cdot \Delta P_l$$

11. Verfahren nach Anspruch 10, **dadurch gekennzeichnet, daß** eine trigonometrische Funktion aus den x-y-Komponenten ($R_{xiest}$ - $\Delta R_{xi}$ ; $R_{yiest}$ - $\Delta R_{yi}$) ermittelt wird, daß die Peilwinkeldifferenz durch eine Taylorreihenentwicklung der trigonometrischen Funktion bestimmt wird, daß der Fehlervektor ($\Delta P_1$) aus den Wegkomponentenfehlern ($\Delta x_0$, $\Delta y_0$) und den Geschwindigkeitskomponentenfehlern ($\Delta v_x$, $\Delta v_y$) die Variablen bei der Taylorreihenentwicklung bildet,

daß ihre Teilkoeffizienten ($h_{i1}$) durch partielle Differentiation der trigonometrischen Funktion nach dem Fehlervektor ($\Delta P_1$) bestimmt werden, ihr erstes Glied gleich dem gemessenen Peilwinkel ($B_{imess}$) und ihr zweites Glied gleich dem Produkt aus den Teilkoeffizienten ($h_{i1}$) multipliziert mit dem Fehlervektor ($\Delta P_1$) ist, und damit die Peilwinkeldifferenz $\delta_i^*$ gemäß folgender Formel bildet:

$$\delta_i^* = \left[ B_{imess} - B_{iest} \right]^2 = \sum_{1=1}^{4} \left\{ h_{i1} \cdot \Delta P_1 \right\}^2$$

und daß die Summe aus quadrierter Peilwinkeldifferenz $\delta_i^*$ und quadrierter Frequenzdifferenz $\Delta F_i$ iterativ gemäß unterstehender Formel minimiert wird und ihr Minimum die Zieldaten liefert.

$$\sum_{i=1}^{1_k} \left[ \left( B_{imess} - B_{iest} \right)^2 + \left( F_{imess} - F_{iest} \right)^2 \right] =$$

$$\sum_{i=1}^{1_k} \left\{ \left[ \sum_{1=1}^{4} h_{i1} \cdot \Delta P_1 \right]^2 + \left[ \sum_{1=1}^{5} g_{i1} \cdot \Delta P_1 \right]^2 \right\} = \min$$

12. Verfahren nach einem der Ansprüche 1 - 11, **dadurch gekennzeichnet, daß** über eine Zeitdauer während einer geradlinigen Bewegung des Trägerfahrzeugs längs eines Eigenlegs eine Zahl ($l_k$) von Peilwinkeln ($B_{imess}$) zum Ziel gemessen wird und ein Peilwinkel-Mittelwert ($\overline{B_{mess}}$) aus den gemessenen Peilwinkeln ($B_{imess}$) bestimmt wird, daß zu jedem gemessenen Peilwinkel ($B_{imess}$) ein geschätzter Peilwinkel ($B_{iest}$) ermittelt wird, daß ein Schätzwinkel-Mittelwert ($\overline{B_{est}}$) aus den geschätzten Peilwinkeln ($B_{iest}$) berechnet wird, daß von jedem gemessenen Peilwinkel ($B_{imess}$) der Peilwinkel-Mittelwert ($\overline{B_{mess}}$) und von jedem geschätzten Peilwinkel ($B_{iest}$) der Schätzwinkel-Mittelwert ($\overline{B_{est}}$) abgezogen werden und einen Meßdifferenzwert bzw. einen Schätzdifferenzwert bilden, daß Meßdifferenzwert und Schätzdifferenzwert subtrahiert werden und diese Subtraktion eine von einem systematischen Peilwinkel ($\vartheta$) freie Peilwinkelabweichung (D) des geschätzten Peilwinkels ($B_{iest}$) vom gemessenen Peilwinkel ($B_{imess}$) liefert und daß über die Zeitdauer $l_k \cdot \Delta t_i$ aller Peilwinkelmessungen bzw. über die Anzahl $l_k$ aller Peilwinkelmessungen die Summe aus den quadrierten Peilwinkelabweichungen $D = [(B_{imess} - \overline{\overline{B_{imess}}}) - (B_{iest} - \overline{\overline{B_{iest}}})]$ und den quadrierten Frequenzdifferenzen $\Delta F_i = (F_{imess} - F_{iest})$ ermittelt wird und daß das Minimum der Summe (min) iterativ bestimmt wird und die Zieldaten somit gemäß folgender Formel liefert:>

$$\sum_{i=1}^{1_k} \left\{ \left[ \left( B_{imess} - \overline{\overline{B_{mess}}} \right) - \left( B_{iest} - \overline{\overline{B_{est}}} \right) \right]^2 + \left( F_{imess} - F_{iest} \right)^2 \right\} = \min$$

13. Verfahren nach Anspruch 11 mit 12, **dadurch gekennzeichnet, daß** die trigonometrische Funktion und ihr Mittelwert gebildet werden, daß die Abweichung oder quadratische Abweichung durch eine Taylorreihenentwicklung der trigonometrischen Funktion und ihres Mittelwerts nach dem Fehlervektor ($\Delta P_1$) bestimmt wird, ihre Koeffizienten ($\gamma_{i1}$)

gleich den Teilkoeffizienten ($h_{i1}$) und ihren Mittelwerten ($\overline{h_1}$) sind, daß ihr erstes Glied gleich dem Meßdifferenzwert und ihr zweites Glied gleich dem Produkt aus den Koeffizienten ($\gamma_{i1}$) multipliziert mit dem Fehlervektor ($\Delta P_1$) ist und die Abweichung (D) bildet, daß die Summe aus quadratischer Abweichung und quadrierter Frequenzdifferenz gemäß folgender Formel minimiert wird:

$$\sum_{i=1}^{1_k} \left\{ \left[ \sum_{l=1}^{4} \left( h_{il} - \overline{h_1} \right) \cdot \Delta P_1 \right]^2 + \left[ \sum_{l=1}^{5} g_{il} \cdot \Delta P_1 \right]^2 \right\} = \min$$

## Claims

1. Method for passive determination of target data by directional reception of sound waves which are transmitted or sent from a target, by means of an electroacoustic transducer arrangement of a sonar receiving system on a carrier vehicle from estimated direction angles ($B_{iest}$), which are determined from estimated positions of the target, and measured direction angles ($B_{imeas}$), with the direction angle difference between the measured and estimated direction angles being iteratively minimized, **characterized in that** the sound waves received from one direction angle are subjected to a frequency analysis, and the frequency of at least one spectral line is determined as the received frequency ($F_{imeas}$), **in that** a frequency difference ($\Delta F_i$, $B_{imeas}$ - $B_{iest}$) is determined between the received frequency ($F_{imeas}$) and an estimated Doppler frequency ($F_{iest}$), **in that** the estimated Doppler frequency ($F_{iest}$) is determined from an estimated transmission frequency ($F_{sest}$) transmitted from the target, and a Doppler shift (Q) is determined from estimated target positions ($R_{xiest}$, $R_{yiest}$), which are also used to determine the estimated direction angle ($B_{iest}$), and their rates of change ($R^1_{xiest}$, $R^1_{yiest}$) are determined in the direction found, and **in that** a direction angle difference ($\delta_i$; $\delta_i^*$; $B_{imess}$ - $B_{iest}$) is determined as the difference between the measured direction angle ($B_{imeas}$) and the estimated direction angle ($B_{iest}$), and **in that** the minimum of the sum of the square of the direction angle difference ($B_{imeas}$ - $B_{iest}$) and the square of the frequency difference $F_{imeas}$ - $F_{iest}$) is determined iteratively over the total number $I_k$ of all measured direction angles using the following formula

$$\sum_{i=1}^{1_k} \left[ \left( B_{imeas} - B_{iest} \right)^2 + \left( F_{imeas} - F_{iest} \right)^2 \right] = \min$$

with the position estimated on reaching the minimum defining the target data.

2. Method according to Claim 1, **characterized in that** the received frequency is determined by means of a Lofar analysis.

3. Method according to Claim 1, **characterized in that** the received frequency is determined by means of a Demon analysis.

4. Method according to one of Claims 1 - 3, **characterized in that** measured frequencies of a plurality of spectral lines are combined and form measured values of the received frequency ($F_{imeas}$).

5. Method according to Claim 4, **characterized in that** measured frequencies of a plurality of spectral lines are transformed individually to frequency values of a fictional spectral frequency of a common synthetic spectral line, and form measured values of the received frequency $F_{imeas}$.

6. Method according to Claim 5, **characterized in that** the fictional spectral frequency is the measured frequency of one of the received spectral lines.

7. Method according to Claim 5, **characterized in that** mean values of the transformed frequency values form measured values of the received frequency ($F_{imeas}$).

8. Method according to one of Claims 5 or 6, **characterized in that** a mean square discrepancy is calculated between all of the transformed frequency values and a selected transformed frequency value, and the transformed frequency values are shifted by this discrepancy and form measured values of the received frequency ($F_{imeas}$).

9. Method according to one of Claims 1 - 8, **characterized in that** x-y components ($R_{xiest} - \Delta R_x$; $R_{yiest} - \Delta R_y$), from an initial position ($x_0$, $y_0$) plus a velocity-dependent distance term [($v_x + \Delta v_x$) · $\Delta t$, ($v_y + \Delta v_y$) · $\Delta t$] are multiplied by velocity component errors ($\Delta v_x$, $\Delta v_y$), and distance component errors ($\Delta x_0$, $\Delta y_0$) are multiplied by their derivatives, and this product is divided by the magnitude of the x-y components, and forms the following quotient function

$$Q(\Delta P) = \frac{1}{c} \frac{\left(\dot{R}_{xest} - \Delta\dot{R}_x\right)\left(R_{xest} - \Delta R_x\right) + \left(\dot{R}_{yest} - \Delta\dot{R}_y\right)\left(R_{yest} - \Delta R_y\right)}{\sqrt{\left(R_{xest} - \Delta R_x\right)^2 + \left(R_{yest} - \Delta R_y\right)^2}}$$

which is equal to the Doppler shift, and where $\Delta P = (\Delta x_0, \Delta y_0, \Delta v_x, \Delta v_y)$, represents an error vector and c represents the speed of sound, **in that** the estimated transmission frequency $F_{sest}$ reduced by a transmission frequency error $\Delta F_s$ is multiplied by the difference between unity and the quotient function $Q(\Delta p)$, and indicates the Doppler frequency estimated incorrectly by the frequency difference $\Delta F_i$, using the following formula:

$$F_{iest} - \Delta F_i = \left(F_{sest} - \Delta F_s\right)\left[\ 1 - Q\left(\Delta x_0, \Delta y_0, \Delta v_x, \Delta v_y\right)\right] \qquad (XXIII)$$

10. Method according to Claim 9, **characterized in that** the error vector ($\Delta P$) is formed from the distance component errors ($\Delta x_0$, ($\Delta y_0$), the velocity component errors ($\Delta v_x$, $\Delta v_y$) and the transmission frequency error ($\Delta F_s$), **in that** the estimated Doppler frequency ($F_{iest} - \Delta F_i$) is developed into a Taylor series by the error vector ($\Delta P$), **in that** their frequency coefficients are formed by partial differentiation based on the error vector ($\Delta P$), whose first term is equal to the measured received frequency ($F_{imeas}$), and whose second term is, in accordance with the formula below, equal to the product of frequency coefficients ($g_{i1}$) multiplied by the error vector ($\Delta P$), and forms the frequency difference ($\Delta F_i$) for determination of the minimum:

$$\Delta F_i = \sum_{l=1}^{5} g_{il} \cdot \Delta P_l$$

11. Method according to Claim 10, **characterized in that** a trigonometric function is determined from the x-y components ($R_{xiest} - \Delta R_{xi}$; $R_{yiest} - \Delta R_{yi}$), **in that** the direction angle difference is determined by a Taylor series development of the trigonometric function, **in that** the error vector ($\Delta P_1$) from the distance component errors ($\Delta x_0$, $\Delta y_0$) and the velocity component errors ($\Delta v_x$, $\Delta v_y$) forms the variables for the Taylor series development, **in that** their coefficient elements ($h_{i1}$) are determined by partial differentiation of trigonometric function based on the error vector ($\Delta P_1$), whose first term is equal to the measured direction angle ($B_{imeas}$), and whose second term is equal to the product of the coefficient elements ($h_{i1}$) multiplied by the error vector ($\Delta P_1$), and thus forms the direction angle difference $\delta_i{}^*$ using the following formula:

$$\delta_i^* = \left[ B_{imeas} - B_{iest} \right]^2 = \sum_{l=1}^{4} \left\{ h_{il} \cdot \Delta P_l \right\}^2,$$

and **in that** the sum of the square of the direction angle difference $\delta_i^*$ and the square of the frequency $\Delta Fi$ is minimized iteratively using the following formula, and its minimum defines the target data.

$$\sum_{i=1}^{l_k} \left[ \left( B_{imeas} - B_{iest} \right)^2 + \left( F_{imeas} - F_{iest} \right)^2 \right] =$$

$$\sum_{i=1}^{l_k} \left\{ \left[ \sum_{l=1}^{4} h_{il} \cdot \Delta P_l \right]^2 + \left[ \sum_{l=1}^{5} g_{il} \cdot \Delta P_l \right]^2 \right\} = \min$$

**12.** Method according to one of Claims 1 - 11, **characterized in that** a total ($I_k$) of direction angles ($Bimeas$) to the target is determined over a time period during which the carrier vehicle is moving in a straight line along one of its own legs, and a direction angle mean value $\left( \overline{B_{meas}} \right)$ is determined from the measured direction angle ($B_{imeas}$), **in that** an estimated direction angle ($B_{iest}$) is determined for each measured direction angle ($B_{imeas}$), **in that** an estimated angle mean value $\left( \overline{B_{est}} \right)$ is calculated from the estimated direction angles ($B_{iest}$), **in that** the direction angle mean value $\left( \overline{B_{meas}} \right)$ is subtracted from each measured direction angle ($B_{imeas}$) and the estimated angle mean value $\left( \overline{B_{est}} \right)$ is subtracted from each estimated direction angle ($B_{iest}$), and respectively form a measurement difference value and an estimated difference value, **in that** the measurement difference value and the estimated difference value are subtracted, and this subtraction defines a direction angle discrepancy (D), which is free of any systematic direction angle ($\vartheta$), between the estimated direction angle ($B_{iest}$) and the measured direction angle ($B_{imeas}$), and **in that** the sum of the squares of the direction angle discrepancies $D = \left[ \left( B_{imeas} - \overline{B_{imeas}} \right) - \left( B_{iest} - \overline{B_{iest}} \right) \right]$ and the squares of the frequency differences $\Delta F_i = (F_{imeas} - F_{iest})$ is determined over the time period $I_k \cdot \Delta t_i$ of all the direction angle measurements and, respectively, over the total number $I_k$ of all the direction angle measurements, and **in that** the minimum of the sum (min) is determined iteratively, and thus defines the target data using the following formula:

$$\sum_{i=1}^{l_k} \left\{ \left[ \left( B_{imeas} - \overline{B_{meas}} \right) - \left( B_{iest} - \overline{B_{est}} \right) \right]^2 + \left( F_{imeas} - F_{iest} \right)^2 \right\} = \min$$

**13.** Method according to Claim 11 together with 12, **characterized in that** the trigonometric function and its mean value are formed, **in that** the discrepancy or the square of the discrepancy is determined by means of a Taylor series development of the trigonometric function and of its mean value based on the error vector ($\Delta P_1$), whose coefficients

($\gamma_{i1}$) are equal to the coefficient elements ($h_{i1}$) and to their mean values $\left(\overline{h_1}\right)$, in that its first term is equal to the measurement difference value, and its second term is equal to the product of the coefficients ($\gamma_{i1}$) multiplied by the error vector ($\Delta P_1$), and forms the discrepancy (D), **in that** the sum of the square of the discrepancy and the square of the frequency difference is minimized using the following formula:

$$\sum_{i=1}^{1_k} \left\{ \left[ \sum_{l=1}^{4} \left(h_{i1} - \overline{h_1}\right) \cdot \Delta P_1 \right]^2 + \left[ \sum_{l=1}^{5} g_{i1} \cdot \Delta P_1 \right]^2 \right\} = \min$$

## Revendications

1. Procédé de détermination passive de données cibles par réception sélective directionnelle d'ondes acoustiques, qui sont émises ou diffusées par une cible, avec un transducteur électroacoustique d'une installation réceptrice de sonar sur un véhicule porteur, à partir d'orientations estimées ($B_{iest}$), qui sont déterminées à partir de positions estimées de la cible, et d'orientations mesurées ($B_{imess}$), la différence entre les orientations étant minimisée par voie itérative entre l'orientation mesurée et l'orientation estimée, **caractérisé en ce que** les ondes acoustiques reçues sous une certaine orientation sont soumises à une analyse de fréquence et la fréquence d'au moins une raie spectrale est déterminée comme fréquence de réception ($F_{imess}$), **en ce qu'**une différence de fréquence ($\Delta F_i$; $B_{imess}$-$B_{iest}$) est définie entre la fréquence de réception ($F_{imess}$) et une fréquence Doppler estimée ($F_{iest}$), **en ce que** la fréquence Doppler estimée ($F_{iest}$) est déterminée à partir d'une fréquence d'émission estimée émise par la cible ($F_{sest}$) et à partir d'un décalage Doppler (Q), à partir de positions cibles estimées ($R_{xiest}$, $R_{yiest}$) que l'on utilise également pour déterminer l'orientation estimée ($B_{iest}$) et **en ce que** leurs modifications temporelles ($R_{xiest}$, $R_{yiest}$) sont déterminées en direction de repérage et **en ce qu'**une différence des orientations ($\delta_i$; $\delta_i^*$; $B_{imess}$ - $B_{iest}$) est définie comme la différence entre l'orientation mesurée ($B_{imess}$) et l'orientation estimée ($B_{iest}$) et **en ce que** l'on détermine le minimum de la somme du carré de la différence d'orientation $B_{imess}$ - $B_{iest}$ et du carré de la différence de fréquence $F_{imess}$ - $F_{iest}$ via le nombre $I_k$ de toutes les orientations mesurées par voie itérative selon la formule suivante :

$$\sum_{i=1}^{1_k} \left[ \left( B_{imess} - B_{iest} \right)^2 + \left( F_{imess} - F_{iest} \right)^2 \right] = \min$$

dans lequel la position estimée en atteignant le minimum fournit les données cibles.

2. Procédé selon la revendication 1, **caractérisé en ce que** la fréquence de réception est déterminée par une analyse Lofar.

3. Procédé selon la revendication 1, **caractérisé en ce que** la fréquence de réception est déterminée par une analyse Demon.

4. Procédé selon l'une quelconque des revendications 1 à 3, **caractérisé en ce que** des fréquences mesurées de plusieurs raies spectrales sont regroupées et forment des valeurs de mesure de la fréquence de réception ($F_{imess}$).

5. Procédé selon la revendication 4, **caractérisé en ce que** les fréquences mesurées de plusieurs raies spectrales sont transformées individuellement en valeurs de fréquence d'une fréquence spectrale fictive d'une raie spectrale artificielle commune et forment des valeurs de mesure de la fréquence de réception $F_{imess}$.

6. Procédé selon la revendication 5, **caractérisé en ce que** la fréquence spectrale fictive est la fréquence mesurée d'une des raies spectrales reçues.

**7.** Procédé selon la revendication 5, **caractérisé en ce que** les valeurs moyennes des valeurs de fréquence transformées forment des valeurs de mesure de la fréquence de réception ($F_{imess}$).

**8.** Procédé selon l'une quelconque des revendications 5 ou 6, **caractérisé en ce qu'**un écart quadratique moyen de toutes les valeurs de fréquence transformées est calculé à partir d'une valeur de fréquence transformée choisie et les valeurs de fréquence transformées sont déportées de cet écart et forment des valeurs de mesure de la fréquence de réception ($F_{imess}$).

**9.** Procédé selon l'une quelconque des revendications 1 à 8, **caractérisé en ce que** des composantes x-y ($R_{xiest}$ - $\Delta R_x$; $R_{yiest}$ - $\Delta R_y$) sont multipliées en partant d'une position initiale ($x_0$, $y_0$) en plus d'un terme de trajet dépendant de la vitesse

$$[(v_x + \Delta v_x) \cdot \Delta t, (v_y + \Delta v_y) \cdot \Delta t)]$$

par des erreurs de composantes de vitesse ($\Delta v_x$, $\Delta v_y$) et des erreurs de composantes de trajet ($\Delta x_0$, $\Delta y_0$) par leurs écarts temporels et ce produit est divisé par la somme des composantes x-y et forme la fonction de quotient suivante :

$$Q(\Delta P) \approx \frac{1}{c} \frac{(\dot{R}_{xest} - \Delta \dot{R}_x)(R_{xest} - \Delta R_x) + (\dot{R}_{yest} - \Delta \dot{R}_y)(R_{yest} - \Delta R_y)}{\sqrt{(R_{xest} - \Delta R_x)^2 + (R_{yest} - \Delta R_y)^2}}$$

qui est égale au décalage Doppler, et dans laquelle $\Delta P = (\Delta x_0, \Delta y_0, \Delta v_x, \Delta v_y)$ représente un vecteur d'erreur et c représente la vitesse du son, **en ce que** la fréquence d'émission estimée $F_{sest}$ diminuée d'une erreur de fréquence d'émission $\Delta F_s$ est multipliée par la différence de un et de la fonction de quotient $Q(\Delta P)$ et **en ce qu'**elle indique la fréquence Doppler estimée de manière erronée de la différence de fréquence $\Delta F_i$ selon la formule suivante :

$$F_{iest} - \Delta F_i = (F_{sest} - \Delta F_s)\left[ 1 - Q(\Delta x_0, \Delta y_0, \Delta v_x, \Delta v_y) \right] \quad (XXIII)$$

**10.** Procédé selon la revendication 9, **caractérisé en ce que** le vecteur d'erreur ($\Delta P$) est formé des erreurs de composantes de trajet ($\Delta x_0$, $\Delta y_0$), des erreurs de composantes de vitesse ($\Delta v_x$, $\Delta v_y$) et de l'erreur de fréquence d'émission ($\Delta F_S$), **en ce que** la fréquence Doppler estimée ($F_{iest}$ - $\Delta F_i$) est développée en une série de Taylor autour du vecteur erroné ($\Delta P$), **en ce que** ses coefficients de fréquence sont déterminés par différenciation partielle selon le vecteur d'erreur ($\Delta P$), son premier membre est égal à la fréquence de réception mesurée ($F_{imess}$) et son second membre selon la formule ci-dessous est égal au produit des coefficients de fréquence ($g_{il}$) multiplié par le vecteur d'erreur ($\Delta P$) et forme la différence de fréquence ($\Delta F_i$) pour déterminer le minimum :

$$\Delta F_i = \sum_{l=1}^{5} g_{il} \cdot \Delta P_l$$

**11.** Procédé selon la revendication 10, **caractérisé en ce que** l'on détermine une fonction trigonométrique à partir des composantes x-y ($R_{xiest}$ - $\Delta R_{xi}$; $R_{yiest}$ - $\Delta R_{yi}$), **en ce que** la différence des orientations est déterminée par un développement en série de Taylor de la fonction trigonométrique, **en ce que** le vecteur d'erreur ($\Delta P1$) des erreurs de composantes de trajet ($\Delta x_0$, $\Delta y_0$) et des erreurs de composantes de vitesse ($\Delta v_x$, $\Delta v_y$) forme les variables dans le développement en série de Taylor, **en ce que** leurs coefficients partiels ($h_{i1}$) sont déterminés par différenciation partielle de la fonction trigonométrique selon le vecteur d'erreur ($\Delta P_1$), son premier membre est égal à l'orientation mesurée (Bimess) et son second membre est égal au produit des coefficients partiels ($h_{i1}$) multipliés par le vecteur d'erreur ($\Delta P_1$) et forme de la sorte la différence d'orientation $\delta_i^*$ de formule suivante :

$$\delta_{i}^{*} = \left[ B_{imess} - B_{iest} \right]^2 = \sum_{l=1}^{4} \left\{ h_{il} \cdot \Delta P_l \right\}^2,$$

et **en ce que** la somme de la différence d'orientations carrée $\delta_i^*$ et de la différence de fréquence carrée $\Delta F_i$ est minimisée par voie itérative selon la formule ci-dessous et son minimum fournit les données cibles :

$$\sum_{i=1}^{l_k} \left[ \left( B_{imess} - B_{iest} \right)^2 + \left( F_{imess} - F_{iest} \right)^2 \right] =$$

$$\sum_{i=1}^{l_k} \left\{ \left[ \sum_{l=1}^{4} h_{il} \cdot \Delta P_l \right]^2 + \left[ \sum_{l=1}^{5} g_{il} \cdot \Delta P_l \right]^2 \right\} = \min$$

**12.** Procédé selon l'une quelconque des revendications 1 à 11, **caractérisé en ce qu'**au cours d'une certaine période de temps pendant un déplacement rectiligne du véhicule porteur le long d'une branche propre, on mesure un nombre ($l_k$) d'orientations (Bimess) par rapport à la cible et on détermine une valeur moyenne des orientations ($\overline{B_{mess}}$) à partir des orientations mesurées ($B_{imess}$), **en ce qu'**on détermine, pour chaque orientation mesurée ($B_{imess}$), une orientation estimée ($B_{iest}$), **en ce qu'**une valeur moyenne d'orientation d'angle estimée ($\overline{B_{est}}$) est calculée à partir des orientations estimées ($B_{iest}$), **en ce que** l'on déduit de chaque orientation mesurée ($B_{imess}$) la valeur moyenne des orientations ($\overline{B_{mess}}$) et de chaque orientation estimée ($B_{iest}$) la valeur moyenne des orientations estimées ($\overline{B_{est}}$), ce qui forment une valeur de différence mesurée ou une valeur de différence estimée, **en ce que** la valeur de différence mesurée et la valeur de différence estimée sont soustraites et cette soustraction fournit un écart d'orientation (D), sans orientation systématique ($\vartheta$), de l'orientation estimée ($B_{iest}$) par rapport à l'orientation mesurée ($B_{imess}$) et **en ce qu'**au cours de la période $l_k.\Delta t_i$ de toutes les mesures d'orientations ou à l'aide du nombre $l_k$ de toutes les mesures d'orientations, on détermine la somme des carrés des écarts d'orientations

$$D = [(B_{imess} - \overline{\overline{B_{mess}}}) - (B_{iest} - \overline{\overline{B_{iest}}})]$$ et des carrés des différences de fréquence $\Delta F_i$

$= (F_{imess} - F_{iest})$ et **en ce que** le minimum de la somme (min) est déterminé par voie itérative et fournit donc les données cibles selon la formule suivante :

$$\sum_{i=1}^{l_k} \left\{ \left[ \left( B_{imess} - \overline{\overline{B_{mess}}} \right) - \left( B_{iest} - \overline{\overline{B_{est}}} \right) \right]^2 + \left( F_{imess} - F_{iest} \right)^2 \right\} = \min$$

**13.** Procédé selon les revendications 11 et 12, **caractérisé en ce que** la fonction trigonométrique et sa valeur moyenne sont formées, **en ce que** l'écart ou l'écart quadratique est déterminé par un développement en série de Taylor de la fonction trigonométrique et de sa valeur moyenne selon le vecteur d'erreur ($\Delta P_1$), ses coefficients ($\gamma_{i1}$) sont égaux aux coefficients partiels ($h_{i1}$) et à ses valeurs moyennes ($\overline{h_1}$), **en ce que** le premier membre est égal à la valeur de différence mesurée et son second membre est égal au produit des coefficients ($\gamma_{i1}$) multipliés par le vecteur d'erreur ($\Delta P_1$) et forme l'écart (D), **en ce que** la somme de l'écart quadratique et du carré de la différence de fréquence est minimisée selon la formule suivante :

$$\sum_{i=1}^{1_k} \left\{ \left[ \sum_{l=1}^{4} \left( h_{i1} - \overline{h_1} \right) \cdot \Delta P_1 \right]^2 + \left[ \sum_{l=1}^{5} g_{i1} \cdot \Delta P_1 \right]^2 \right\} = \text{min}$$

Fig. 1

Fig. 2

Fig. 3

EP 1 410 060 B1

32

Fig. 4c

Fig. 4d

Fig. 4a

Fig. 4b

Fig. 4

Fig. 5c

Fig. 5d

Fig. 5a

Fig. 5b

Fig. 5

Fig. 6

Fig. 7

Fig. 8c

Fig. 8d

Fig. 8a

Fig. 8b

Fig. 8

Fig. 9

EP 1 410 060 B1

Fig. 10

Fig. 11a

Fig. 11b

Fig. 11c

Fig. 11d

Fig. 11